# EUROPÄISCHE PATENTSCHRIFT

(11) **EP 3 859 287 B1**
(45) Veröffentlichungstag und Bekanntmachung des Hinweises auf die Patenterteilung: **09.03.2022**
(21) Anmeldenummer: 21154130.5
(22) Anmeldetag: 28.01.2021
(51) Int. Cl.: G01F 11/00, G01F 15/00, B01F 13/10, B01F 15/00, G01G 11/00, G01G 13/29, G01G 19/34

(54) **INTELLIGENTE ANLAGESTEUERUNG UND DOSIERVORRICHTUNG**
INTELLIGENT SYSTEM CONTROL AND DOSING DEVICE
COMMANDE INTELLIGENTE D'INSTALLATION ET DISPOSITIF DE DOSAGE

(30) Priorität: 28.01.2020 CH 1012020
(43) Veröffentlichungstag der Anmeldung: 04.08.2021
(73) Patentinhaber: Bühler AG, 9240 Uzwil (CH)
(72) Erfinder: GRAEBER, Matthias, 9000 St. Gallen (CH); CUI, Chenhao, 1024 Ecublens (CH); LEFEBVRE, Clêment, 1022 Chavennes-Prês-Renens (CH); BRÜHWILER, Michael, 9245 Oberbüren (CH); STEINER, Wolfgang, 9247 Henau (CH); URBISAGLIA, Vincenzo, 8370 Sirnach (CH)
(74) Vertreter: Leimgruber, Fabian Alfred Rupert

(56) Entgegenhaltungen:
- EP-A1- 0 620 421
- WO-A1-03/047737
- WO-A1-2019/141847
- DE-A1- 2 810 810
- DE-C2- 2 810 810
- Wikipedia: "Dynamic-Time-Warping", , 25. März 2017 (2017-03-25), XP055812351, Gefunden im Internet: URL:https://de.wikipedia.org/w/index.php?t itle=Dynamic-Time-Warping&oldid=163924771 [gefunden am 2021-06-09]
- DU SHENG ET AL: "Operating mode recognition of iron ore sintering process based on the clustering of time series data", CONTROL ENGINEERING PRACTICE, PERGAMON PRESS, OXFORD, GB, Bd. 96, 9. Januar 2020 (2020-01-09), XP086048060, ISSN: 0967-0661, DOI: 10.1016/J.CONENGPRAC.2020.104297 [gefunden am 2020-01-09]

## Beschreibung

### Technisches Gebiet der Erfindung

Die vorliegende Erfindung betrifft eine Vorrichtung zum Dosieren von in einem Gas und/oder Feststoff-Strom vorliegenden Feststoff sowie Verfahren zum Dosieren eines solchen. Insbesondere betrifft die Erfindung eine Dosiervorrichtung mit Wiegevorrichtung, z.B. für Schüttgut, mit optimierter Anlagensteuerung.

### Stand der Technik

In vielen Prozessen der verarbeitenden Industrie(z.B. Futtermühlen, Bäckereien, Extrusionslinien) ist die genaue Dosierung der zu verwendenden Schüttgut-Rohmaterialien für eine bestimmte Rezeptur sehr wichtig. Eine ungenaue Dosierung kann zu Einbussen in der Qualität und Sicherheit des Endproduktes führen. Unterschiedliche Dosierer sind für industrielle Prozesse bekannt, welche von Schneckendosierern über Vibrations-Dosierwaagen, Dosierpumpen, Dosierbandwaagen, Dosierwaagen für Flüssigkeiten bis hin zu Durchflussmessern etc. reichen. Die verschiedenen Dosierer können dabei unterschiedlich konfiguriert und auch kombiniert werden, um eine optimale Lösung für eine spezifische Anwendung bereitzustellen.

Im Folgenden sollen einige solcher Dosiervorrichtungen des Standes der Technik diskutiert werden: (A) Schnecken-Dosierer sind gut geeignet für das Dosieren von frei fliessenden Schüttgütern wie Granulaten, körnigem Material und Pulvern. Volumetrische Schneckendosierer sind die gängigsten Dosierer im Stand der Technik. Dabei kommen sowohl Einfachschnecken- wie auch Doppelschneckendosierer in volumetrischer und gravimetrischer Ausführung zum Einsatz, insbesondere in verschieden, angepassten Grössen. Damit können gewünschte Dosierleistungen abgedeckt werden und Lösungen für spezifische Herausforderungen im Schüttguthandling bereitgestellt werden. Im Stand der Technik sind auch derartige Dosiervorrichtungen bekannt, die speziell für schnelle Materialwechsel optimiert sind und z.B. für variierende Materialeigenschaften speziell konfiguriert werden können. Andere Dosiervorrichtungen sind speziell für gute Reinigbarkeit ausgelegt und können so spezielle Hygieneanforderungen der Lebensmittel- und Pharmabranche erfüllen. Doppelschnecken-Dosierer finden im Stand der Technik vor allem für das Dosieren von frei fliessenden Pulvern und feinem körnigem Material oder Granulaten Anwendung. Sie finden jedoch auch zum Dosieren von schwierigeren Materialien Anwendung, wie zum Beispiel Farbstoffe, klebrige, brückenbildende oder schiessende Pulver, Fasern und Glasfasern. Doppelschnecken-Dosierer werden auch als Mikrodosierer für sehr feines Material eingesetzt, insbesondere um Ingredienzen mit sehr kleiner Dosierleistung aber hoher Genauigkeit zu dosieren z.B. für den Einsatz in chemischen und pharmazeutischen Prozessindustrien. Spezifische Konstruktionsmerkmale sorgen dabei dafür, dass Schüttgüter bei sehr niedriger Dosierleistung (z.B. ab 32 g/h) sehr genau dosiert werden können, insbesondere mit möglichst minimalen Rückständen im Dosierer. Eine modulare Bauweise kann dabei die Flexibilität für den Dosierprozess erhöhen und einen einfacheren Zugang für Reinigung und Unterhalt ermöglichen. (B) Eine andere Dosiervorrichtung im Stand der Technik sind die sog. Schüttgutpumpen (BSP: Bulk Solids Pump). Schüttgutpumpen wurden für die schonende und pulsationsfreie Dosierung frei fliessender Pellets, Granulate, Flocken, Pulver und für bruchempfindliche Schüttgüter konstruiert. Das Konzept des BSP-Dosierers beruht nicht auf herkömmlichen Schnecken-, Förderband- oder Vibratortechniken. Stattdessen wird das Prinzip der formschlüssigen Verdrängung genutzt, um frei fliessende Produkte mit möglichst hoher Genauigkeit, pulsationsfrei und materialschonend zu dosieren. Der BSP-Dosierer verfügt über vertikal rotierende Scheiben, die eine Verdichtungszone erzeugen und das Material gleichmässig vom Trichter zum Auslass befördern. Als Ergebnis wird ein möglichst linearer Durchsatz abgestrebt. (C) Wenn es auf pulsationsfreie Dosierung ankommt, insbesondere bei geringen Dosierleistungen, sind im Stand der Technik auch Differential-Dosierwaagen z.B. mit Vibrationsrinne bekannt, die möglichst frei fliessende Schüttgüter ermöglichen. Wichtige Konstruktionsmerkmale bei Vibrationsdosierer sind eine möglichst hohe Genauigkeit, pulsationsfreie Antriebstechnologie und z.B. durch Modularität erreichte Hygienestandards. Die Vibrationsdosierer des Standes der Technik eignen sich für die schonende Dosierung einer Vielzahl von Schüttgütern, insbesondere empfindliche Materialien und Problemstoffe wie fertige brüchige Lebensmittel und Inhaltsstoffe, Flocken und Glasfasern. (D) Für flüssiges Material, insbesondere zähflüssiges, viskoses oder pastöses Material sind im Stand der Technik u.a. Differenzial-Dosierwaagen bekannt, die eine kontinuierliche volumetrische oder gravimetrische Fliesskontrolle für Flüssigkeiten und Pasten ermöglichen. Dabei werden typischerweise zur gravimetrischen Dossierung eine Pumpe und Tank mit einer Hänge- oder einer Plattformwaage kombiniert. Die Dosierpumpe wird ausserhalb des Wägebereiches installiert. Die Anforderungen beim Dosieren von Flüssigkeiten variieren je nach Anwendung. Dazu ist die Verwendung unterschiedlicher Pumpen und Tanks bekannt, die dann zu einem Flüssigkeitsdosierer kombiniert werden. Die Dosierpumpe wird entsprechend dem zu dosierenden Material und der Dosierleistung gewählt. (E) Im Stand der Technik sind weiter Dosierbandwaagen bekannt. Dosierbandwaagen sind meist vergleichsweise einfach aufgebaute gravimetrische Dosierer, die eine hohe Genauigkeit und eine effiziente Prozesskontrolle bieten. Sie können als Dosierer, Chargendosierer oder Messbandwaagen eingesetzt werden. Dosierbandwaagen eigenen sich insbesondere für das Messen von unkontrollierten Schüttgutströmen, bei niedriger Raumhöhe, oder für das Dosieren von bruchempfindlichem Schüttgut, welches durch andere Dosiermethoden beschädigt würde. Diese gravimetrischen Dosierer sind zudem in der Lage, grosse Schüttgutvolumina und Materialien mit den unterschiedlichsten Fliesseigenschaften zu dosieren. (F) Differential-Dosierbandwaagen sind die Kombination einer Bandwaage, die zum Beispiel schonendes Schüttgut-Handling erlauben, mit den genauen Steuerungsmöglichkeiten eines Differentialdosiersystems. Differential-Dosierbandwaagen sind ideal für die Dosierung von bruchempfindlichen Produkten oder von Pulvern mit spezifischen Eigenschaften, zum Beispiel von Pulvern mit niedrigem Schmelzpunkt, Pulvern mit wachsartigen Additiven oder sehr abrasiven Materialien. (G) Für das Erfassen, Registrieren oder Kontrollieren von Schüttgut-Strömen sind z.B. auch sog. Flow Meter als Alternative zu traditionellen Dosieranlagen bekannt. Flow Meter funktionieren ohne rotierende Teile und deshalb auch ohne mechanische Einwirkung auf das Schüttgut, was für bestimmte Anwendungen ein wichtiger Vorteil gegenüber anderen Technologien sein kann. Dank der einfachen Konstruktion werden mit Flow Meter hohe Messgenauigkeiten erreicht, unabhängig von den Betriebsbedingungen. Das Schüttgut kann z.B. durch ein, zwei oder mehr Messkanäle geleitet werden, wobei Lastzellen die Durchflussmenge pro Zeiteinheit messen und mit gewünschter Genauigkeit erfassen. (H) Kontinuierliche gravimetrische Dosier- und Mischsysteme kommen in vielen modernen Extrudier- und Mischprozesse zum Einsatz. Als Lösung für die Differentialdosierung von mehreren verschiedenen Inhaltsstoffen erlauben sie hohe Genauigkeit, geringen Raumbedarf, flexibles Schüttgut-Handling, schnelle Materialwechsel und gute Reinigbarkeit zu kombinieren. Weiter lassen sich weitere Standard-Dosierertypen integrieren. Solch integrierte Systeme ermöglichen die Gruppierung von einer Vielzahl von Dosierern, zum Beispiel um einen Extrudereinlauf herum. (I) Bei gravimetrischen Chargenmischer werden verschiedene Schüttgüter in den gewünschten Proportionen sequenziell in einen Sammeltrichter mit Wägeeinheit eingewogen. Das abgewogene Material gelangt anschliessend typischerweise in eine separate Mischkammer, wo eine homogene Mischung erreicht wird. Dank dieses kombinierten Dosier- und Wägesystem können die Zugaben der verschiedenen Materialien in der gewünschten Menge für jede Charge gesteuert werden und werden nicht über mehrere Chargen gemittelt. Standardmischer können z.B. für den Einsatz über einem Extrudereinlauf vorgesehen sein, wobei die Materialfluss-Steuerung durch den Extruder erfolgt.

Wie bereits angetönt wird zwischen volumetrischen und gravimetrischen Dosierern unterschieden. Volumetrische Dosierer, wie z.B. Schneckendosierer, liefern ein bestimmtes Materialvolumen pro Zeiteinheit. Die volumetrische Messung erfolgt über bekannte Volumeneinheiten eines bestimmten Materials, das mithilfe abgetasteter Kalibrierung in einen abgeleiteten massebasierten Austrag übertragen wird. Dosierungsänderungen werden z.B. über die Anpassung der Schneckendrehzahl erreicht. Bei der volumetrischen Dosierung erfolgt keine Massenbestimmungen unter Ausnutzung der Gewichtskraft wie bei der gravimetrischen Dosierung. Volumetrische Dosierer können Schwankungen in der Materialdichte nicht erkennen. Abweichende Austraggeschwindigkeiten bleiben unberücksichtigt. Volumetrische Dosierer bieten häufig eine einfache und günstige Art Schüttguter in einer gewünschten Menge zu dosieren. Nicht nur Schnecken, sondern nahezu jeder mechanische Förderer transportieren ein bestimmtes Volumen. Ist z.B. eine Austragungsschnecke im Einlaufbereich zu 100% gefüllt, bedeutet dies, dass es ein definiertes Volumen zwischen den Schneckenblättern gibt. Je nach Drehzahl ergibt sich dadurch eine Fördermenge in m³/h. Diese Fördermenge wird berechnet und bei der Inbetriebnahme eingestellt. Ändert sich das Fliessverhalten des Schüttgutes, ändert sich auch die Förderleistung, ohne dass es direkt detektiert werden kann. Bei vielen industriellen Anwendungen benötigt man jedoch eine genaue Tonnage. Hierfür ist eine volumetrische Dosierung weniger geeignet, da je nach Schüttgewicht das Fördergewicht schwankt. Bei der volumetrischen Dosierung erfolgt die Dosierung meist über Förderschnecken, die unter einem Rohmaterialsilos angebracht sind. Das geförderte Produkt läuft dann in eine Waage, in der das Gewicht der geförderten Menge kontinuierlich bestimmt wird. Über die elektronische Steuerungseinheit der Waage wird die Förderschnecke angesteuert und die Fördermenge geregelt. Zur Optimierung dieses Prozesses werden Dosierparameter hinterlegt.

Bei gravimetrischen Dosierern unterscheidet man zwischen kontinuierlicher und Batch-Dosierung. Die kontinuierlich gravimetrische Dosierung unterscheidet sich von der volumetrischen dadurch, dass die Fördergeschwindigkeit (z.B.: Drehzahl der Schnecke) individuell angepasst wird. Dafür ist ein Vorbehälter mit Wiegezellen ausgestattet. Durch die Gewichtsabnahme pro Zeit ergibt sich eine genaue Förderleistung in t/h. Da die Förderleistung durch die Wiegezellen kontrolliert und gegebenenfalls angepasst werden kann, können mit diesen Systemen im Stand der Technik z.B. Genauigkeiten von bis zu ±2% erreicht werden. Bei der gravimetrischen Batch-Dosierung wird dagegen der Zielbehälter mit Wiegezellen ausgestattet. Mit dem Austragungselement wird das Material im Behälter dosiert, bis das geforderte Gewicht erreicht ist. Je nach Genauigkeit, muss man mit Grob- und Feinstrom arbeiten. Stand der Technik Systeme erreichen dadurch eine Batch-Genauigkeit z.B. von bis zu ±0,5%.

Unabhängig vom Dosierverfahren und der technischen Ausgestaltung des Dosierers sollte im Idealfall die Förderkurve (d.h. geförderte Menge über Zeit) jeder einzelnen Komponente einer Rezeptur immer gleich sein. Allerdings ergeben sich durch verschiedene Einflüsse (Art des Rohmaterials, Feuchtigkeit, lokale Temperaturverteilung, Verklumpung, natürliche Schwankungen des Rohmaterials, Geometrie des Silos) Abweichungen von den erwarteten Fliesseigenschaften des Schüttgutes. Dies führt zu Inkonsistenzen in der Fördergeschwindigkeit, der Fördermenge, und damit der Dosiergenauigkeit. Eine Verbesserung der Dosiergenauigkeit kann erreicht werden durch Auswahl des am besten geeigneten Silos für ein bestimmtes Rohmaterial und eine regelmässige Anpassung der Dosierparameter für jedes Rohmaterial. In der Praxis geschieht dies basierend auf Expertenerfahrung, ohne detaillierte Analyse historischer Daten. Wie oben diskutiert, für unterschiedliche Bereiche der Verfahrenstechnik ist die Genauigkeit des Einstellens von vorgegebenen Feststoffströmen als Masse oder Volumen von grosser Bedeutung, wobei die Anforderungen verschieden hoch sind. Bei der pneumatischen Förderung von Feststoffpartikeln durch Rohrleitungen kommen beispielsweise Dosierschnecken, Zellradschleusen oder Dosierschieber zum Einsatz, bei denen sich allerdings dem ausfliessenden Feststoff-Massenstrom überlagernde periodische Schwankungen als nachteilig erweisen können. Auch bei anderen Vorgängen, wie z.B. dem Einspeisen von fluidisierten, gegebenenfalls erhitzten, FeststoffTeilchen in einen Reaktionsraum, ist eine kontrollierte, genau dosierte Einspeisung vonnöten.

Mess- und Analysemesstechnik bei Verarbeitungsprozessen sind im Stand der Technik bekannt. Ebenso sind verschiedene Mess- und Analysemesstechnik in Zusammenhang mit damit verbundenen Verarbeitungsverfahren, wie Dosieren, Mischen oder Sortieren. Ob Getreide, Lebensmittel oder Kunststoff bis hin zu Zellen: Es lassen sich mit solchen Mess- und Analysemesstechnik Analysen und Qualitätskontrollen, und damit beispielsweise bei der Verarbeitung reinere oder anderweitig optimierte Produkte und vorschriftskonforme sichere Lebensmittel produzieren. Analysemesstechniken nutzen eine breite Palette von Technologien, insbesondere optische (z.B. Kameras, d.h. optische Sensoren, Lichtquellen, insb. Fluoreszenz etc.), chemische und mechanische, und technisch generierte dynamische Anpassung und Verbesserung von Muster- oder Konturenerkennung z.B. durch maschinellen-basierte Lernvorrichtungen (ML) etc.. Abgesehen von AI(Artificial Intelligence)-basierenden Verfahren sind je nach gesuchten physikalischen Messgrössen auch andere Prinzipien zur Echtzeiterkennung erfassten Messdaten bekannt. Bei ML-basierten Messtechniken lassen sich mittel maschinellem Lernen Muster und Gesetzmässigkeiten der erfassten Messdaten erkennen. So kann ein geeignetes ML-basiertes System auch unbekannte Daten beurteilen. Möglicher Anwendungen liegen insbesondere in automatisierten Diagnoseverfahren und der Realisierung autonomer Systeme. Zum Finden von neuen Muster und Auffälligkeiten können auch Techniken wie "Knowledge Discovery in Databases" und "Data-Mining" verwendet werden, bei denen es insbesondere um das Finden von neuen Mustern und Gesetzmässigkeiten geht. Viele Algorithmen können für beide Zwecke verwendet werden. So können z.B. Methoden der "Knowledge Discovery in Databases" genutzt werden, um Lerndaten für "maschinelles Lernen" zu generieren oder vorzubearbeiten. Im Gegenzug dazu können z.B. Techniken aus dem maschinellen Lernen beim Data-Mining Anwendung finden. Ebenfalls im Stand der Technik bekannt sind Techniken unter dem Sammelbegriff es "Deep Learning", welches eine mögliche Lernvariante von ML-basierten Vorrichtungen mittels künstlicher neuronaler Netze darstellt. Das Deep Learning, auch mehrschichtiges Lernen oder tiefes Lernen, bezeichnet im Stand der Technik bestimmte Verfahren des maschinellen Lernen, welche künstliche neuronale Netze(KNN) mit zahlreichen Zwischenschichten (hidden layers) zwischen Eingabeschicht und Ausgabeschicht einsetzt und in einem Lernprozess eine spezifische innere Struktur herausbilden können, welche adaptiv Wissen speichern können. Mit den oben diskutierten Techniken lassen sich mittels optischem Sortieren z.B. Produktfehler und Fremdstoffe farb-, form- und strukturbasiert ausfiltern oder entfernen oder mindestens erkennen. Unser umfassendes Angebot richtet sich nach Ihren Vorgaben bei Budget, Kapazität und Produktqualität. Wie oben bereits diskutiert, betrifft die Erfindung insbesondere Mess- und Analysetechniken zur Analyse, Monitoring und Qualitätskontrolle von Schüttgut, insbesondere mit anschliessendem Dosieren, Mischen, Sortieren und/oder Reinigen durch Auslese des Schüttgutes basierend auf den Messwerten. Das Schüttgut kann dabei in der Form von Nahrungsmitteln wie Getreidekörner, Reiskörner, Sojabohnen, Sonnenblumenkerne, Kaffeebohnen u. dgl. sein.

Die im Stand der Technik bekannten Dosier- und Wiegevorrichtung umfassen in der Regel ein Gehäuse mit einer Einlassöffnung und einer Auslassöffnung für ein zu dosierendes und wiegendes Produkt und werden häufig in Leitungen angeordnet, z.B. um den Durchsatz eines Produkts zu Überwachen oder ein Produkt gravimetrisch zu Dosieren (bspw. bei einer Absackung). Vereinfacht dargestellt ist in einem Gehäuse eine Wiegefläche angeordnet, welche mittels einer Betätigungseinrichtung zwischen einer Wiegeposition und einer Dosierposition bewegbar ist und mit mindestens einem Gewichtssensor in Wirkverbindung steht. Mit der Wiegefläche in der Wiegeposition wird ein Produktfluss zwischen Einlassöffnung und Auslassöffnung verhindert. Ein Gewicht des auf der Wiegeflache lastenden Produktes ist somit mittels des wenigstens einen Gewichtssensors ermittelbar. Mit der Wiegefläche in der Wiegeposition wird der Produktfluss zwischen Einlassöffnung und Auslassöffnung zumindest teilweise ermöglicht. Zur Steuerung der Betätigungseinrichtung ist eine Steuereinheit vorhanden, welche mit dem wenigstens einen Gewichtssensor verbunden ist. Aus der DE19734109A1 ist eine Vorrichtung zum Dosieren und Abgeben einer Füllgutmenge bekannt. Die Vorrichtung weist mehrere Schneckendosierer auf, die jeweils mittels eines flexiblen Schlauchstucks mit einer Durchgangskammer verbunden sind. Die Durchgangskammer ist horizontal beweglich ausgebildet, so dass diese über eine bestimmte Förderstrecke mit einem Aufnahmebehälter synchron mitbewegt werden kann. Ein Auslass der Durchgangskammer ist somit über die bestimmte Förderstrecke in relativ fester Position zum Aufnahmebehälter.

Unabhängig von der verwendeten Dosiervorrichtung und dem Anwendungsgebiet, d.h. von Dosiervorrichtungen von grobkörnigem Material, wie etwa der gravimetrische und volumetrische Kohlezuteiler für Heizkessel, Dosiervorrichtungen für Getreidekorn und mehliges Material bis hin zur Präzisionsmikrodosiertechnologie in der Pharmaindustrie, weisen alle im Stand der Technik bekannten Dosierverfahren ähnliche technisch Probleme und Herausforderungen basierend auf ähnlichen Nachteilen in Bezug auf die Dosiergenauigkeit auf, welche insbesondere intrinsisch mit den unterschiedlichen Einflüssen (Art des Rohmaterials, Körnigkeit, Viskosität, lokale Temperaturverteilung, Luftdruck, Geometrie des Silos, Ausgestaltung der Fördereinheit (Schnecke etc.) etc.) und Abweichungen beim Schüttgut (Feuchtigkeit, Verklumpung, natürliche Schwankungen des Rohmaterials und seiner physikalischen Charakteristiken, etc.) zusammenhängt, die nur schwer zu kontrollieren sind. Dies hat direkten Einfluss auf die Stabilität der Förderkurve für die einzelnen Komponenten einer Rezeptur und führt zu Inkonsistenzen in der Fördergeschwindigkeit, der Fördermenge, und der Dosiergenauigkeit. Beim Beispiel der Kohlezuteilung für Kessel variieren die Eigenschaften von Kohle aufgrund von Grössenunterschieden und dem Einfluss von Feuchtigkeit ständig. Das wiederum beeinflusst Heizwert, Flusseigenschaften und Dichte. Der Dosierer sollte in der Lage sein, Auswirkungen von Feuchtigkeit auf Kohle und die daraus resultierenden Dichteänderungen auszugleichen, da der vom Dosierer gelieferte Brennstoff auf die von Kohlekraftwerken tatsächlich benötigte Energie möglichste genau abgestimmt sollte. Obwohl die diskutierten Nachteile intrinsisch in den Umgebungseinflüssen und Materialcharakteristiken zusammenhängen, kann Auswahl geeigneter Dosiervorrichtungen dazu beitragen, Fehlverhalten der Dosiervorrichtungen zu minimieren. Die Auswahl der Dosiervorrichtungen hängt vom Material, dem Dosierprinzip und dem erforderlichen Durchsatz ab. Welche Dosiervorrichtung für welche Aufgabe technisch am besten geeignet ist, hängt vom zu dosierenden Material, dessen Schüttgutspezifikation sowie vom Dosierprinzip (volumetrisch oder gravimetrisch) ab. Ausschlaggebend sind ferner die benötigten Dosiermengen pro Zyklus beziehungsweise je Zeiteinheit (Massestrom). Wie erwähnt spielt auch die Dosierumgebung, etwa Erschütterungen oder Reinraumbedingungen, eine Rolle. Wie oben beispielshaft diskutiert, umfassen die bekannten Dosiervorrichtungen z.B. Dosier-Schnecke, Dosier-Konus, Dosier-Schieber, DosierScheibe, Zellenrad-, Dosierrad oder Dosier-Walze. Bei Schneckendosierern wird das Material aktiv mit einer Förder-Spindel (Schnecke) dosiert und zugleich zum Auslass gefördert. Die Schnecke ist dabei von einem Hüllrohr umschlossen. Ausschlaggebend für die Dosiermenge sind der Schneckendurchmesser, die Steigung der Schnecke und die Drehzahl. Um zu vermeiden, dass Material unkontrolliert nachfliesst, arbeiten Schneckendosierer vielfach nach schräg oben. Diese Anordnung erleichtert zudem die Reinigung. Schnecken-Dosierungen tragen das Material kontinuierlich aus. Sie eignen sich für volumetrische und gravimetrische Dosiersysteme sowie für kleinste bis grösste Dosiermengen. Passend zu den verschiedensten Schüttgütern gibt es diese Dosiervorrichtungen im Stand der Technik in zahlreichen Ausführungen. Zur Verarbeitung von nicht frei fliessenden Schüttgütern sind Zuführhilfen erforderlich. Für Schüttgüter mit sehr niedrigem Schmelzpunkt sind Schneckendosierer meist nur bedingt geeignet, da beim Austragen des Materials zwischen Schnecke und Hüllrohr Friktionswärme entstehen kann. Von Vorteil ist, dass ein synchroner Betrieb ohne Nachmischung möglich ist. Bei der Konus-Dosierung fliesst das Material hingegen passiv aus dem Vorratsbehälter. Zusammen mit dem Zylinder bildet der Konus hierfür ein Ventil, das den Materialfluss freigibt oder stoppt. Der Materialaustrag kann sowohl kontinuierlich als auch pulsierend erfolgen. Die Dosiermenge wird von Konusquerschnitt, Hubhöhe und Öffnungsdauer bestimmt. Aufgrund der vertikalen Arbeitsweise des Kolbens eignen sich Konus-Dosierer für leicht bis schwer fliessende oder Brücken bildende Schüttgüter. Bei nicht frei fliessenden Schüttgütern sind allerdings Zuführhilfen erforderlich. Eingesetzt werden diese Systeme vorwiegend bei gravimetrischen Chargen-Dosiersystemen für kleinste bis grösste Dosiermengen. Da sich dieses Dosierprinzip nicht für die Synchrondosierung eignet, ist ein Mischer erforderlich. Bei Dosierschieber, wie bei der Konus-Dosierung, fliesst das Material auch bei der Schieber-Dosierung passiv aus dem Vorratsbehälter. Der Schieber steuert den Materialaustrag und kann vertikal oder horizontal angeordnet sein. Der Materialaustrag erfolgt kontinuierlich oder pulsierend, wobei der Schieberquerschnitt und die Öffnungsdauer die Dosiermenge bestimmen. Dosierschieber kommen für körnige und pulverige, frei fliessende Schüttgüter infrage. Bei schwer fliessendem Dosiergut ist wegen der Gefahr einer Brückenbildung eine Zuführhilfe erforderlich. Schieber-Dosierer eignen sich für kleine bis grösste Durchsätze, jedoch nur für gravimetrische Batch-Dosiersysteme. Ein synchroner Betrieb ist mit der Schieber-Dosierung nicht möglich, weshalb ein Mischer erforderlich ist. Die Verfahrensweise von Scheibendosierern und Rad-, Walzen- oder Zellrad-Dosiervorrichtungen ist vom Prinzip her identisch: Sie dosieren das Material aktiv und volumenabgrenzend (in Kammern), vergleichbar mit einem jeweils gestrichten gefüllten Messbecher oder Löffel. Überschüssiges Material (Schüttkegel) hält ein Abstreifer zurück. Diese Arbeitsweise wird auch als "digital volumetrisch" bezeichnet. Grund ist, dass in der Anfangszeit und bei einfachen Systemen nur ganze Kammern als "Dosier-Einheit" möglich waren. Je nach Ausführung können moderne Systeme mittlerweile wesentlich genauer dosieren. Zu berücksichtigen ist in diesem Zusammenhang dennoch, dass eine dem Durchsatz angepasstes Dosiervorrichtung wesentlichen Einfluss auf die Dosiergenauigkeit hat. Bei beiden Dosierarten kann der Materialaustrag portionsweise oder kontinuierlich erfolgen. Dabei wird die Dosiermenge je Zeiteinheit vom jeweiligen Kammervolumen und der Drehzahl bestimmt. Beide eignen sich für körnige und pulverförmige, frei fliessende Schüttgüter sowie für sehr kleine bis mittlere Dosiermengen. Bei schlecht fliessenden Materialien besteht hingegen die Gefahr unterschiedlicher Füllgrade, weshalb Zuführhilfen erforderlich sind. Beide Dosierorgane kommen hauptsächlich bei volumetrischen Dosiersystemen infrage. Passend zur benötigten Dosierleistung und den Schüttguteigenschaften sind im Stand der Technik auch unterschiedliche Scheibentypen oder Zellenräder bekannt. Scheibendosierer können überdies mit einem Messer als Abstreifer ausgestattet sein, das Granulatkörner zerteilen kann, was den Füllgrad der Kammern und damit auch die Dosierkonstanz erheblich verbessert. In dieser Ausführung eignen sich Scheibendosierer besonders für kleine Durchsätze mit Mikrogranulat.

Auch für die Art der Schüttgüter bzw. Rohmaterialen gilt, dass unabhängig von der Art der zu dosierenden Rohmaterialien unterschiedliche äussere Einflüsse und natürlich schwankende physikalische Eigenschaftsparameter eine direkten Einfluss auf die Stabilität der Förderkurve haben, welche von den bekannten Dosiervorrichtungen des Standes der Technik nur ungenügend aufgefangen werden. Schüttgüter werden in der Industrie in den verschiedensten Prozessen hergestellt und verarbeitet. Dabei ist eine genaue Dosierung der Schüttgüter in den meisten Prozessen grundlegend. Schüttgüter stellen ein disperses System aus Feststoffpartikeln als disperse Phase und der umgebenden Luft als kontinuierliche Phase dar. Dazu zählen unter anderem körniges Material wie Korn, Trägermaterialien z.B. von Katalysatoren, Kohlepellets, Tabletten, Sand, Zement und viele weitere pulvrige oder körnige Materialen (u.a. Getreide, Mais, Kaffeebohnen etc. bei der Nahrungsmittel und Futterherstellung). Um das Dosierverhalten von Schüttgütern einschätzen zu können, ist es notwendig, die physikalischen Vorgänge, die im Dosiersystem stattfinden, zu kennen und modellieren zu können. Die Eigenschaften des zu dosierenden Schüttguts müssen auf den Zustand, in dem sich das Schüttgut während der Dosierung befindet, abgestimmt sein. Da Dosiersysteme typischerweise aus zwei Haupteinheiten bestehen, namentlich dem Dosierbehälter und der Dosierschnecke, müssen auch bei der Beurteilung bzw. dem, Verständnis des Dosierverhaltens zwei Aspekte beachtet werden. Zum einen muss verstanden werden, wie sich das Schüttgut physikalisch im Dosierbehälter verhält, d.h. ob bzw. wie das Schüttgut zur Dosierschnecke gelangt. Dabei können Schächte oder Brücken ein Ausfliessen des Schüttguts verhindern. Zum anderen muss untersucht werden, wie sich das Schüttgut in der Dosierschnecke verhält. So kann sich beispielsweise ein Schüttgut durch die Schubwirkung der Schnecke und der entgegenwirkenden Reibung im Dosierrohr so stark verdichten, dass es genügend Kraft entwickelt, das Dosiersystem durch Verstopfen zu blockieren. Das Verhalten eines Schüttguts kann auf die vorhandenen Kräfte zwischen den einzelnen Partikeln zurückgeführt werden. Dazu zählen unter anderem Van-der-Waals-Kräfte, elektrostatische Kräfte, Flüssigkeitsbrücken und formschlüssige Bindungen, Reibkräfte etc.. Die Betrachtung der Schüttgüter auf partikulärer Ebene ist jedoch sehr komplex, weshalb häufig bei der Beurteilung des Fliessverhaltens der Schüttgüter diese näherungsweise als ein Kontinuum angenommen werden. Dabei zeigt sich ein komplexeres Verhalten als Newton'sche Flüssigkeiten, Hooke'sche Festkörper oder Gase. Sie nehmen eine Art Zwischenstellung ein. Sie übertragen geringe Zugspannungen und können im Ruhezustand Druck- und Schubspannungen weitergeben wie Festkörper. Auch können kohäsive Schüttgüter unter Druck verdichtet werden wie Gase. Zusätzlich können sie unter der Einwirkung von genügend grossen Schubspannungen ähnlich wie Flüssigkeiten fliessen. Aufgrund dessen liegt das theoretische Spannungsverhältnis von Schüttgütern von Horizontal- und Vertikaldruck zwischen denen von Feststoffen (null) und Flüssigkeiten (eins). Das sogenannte Horizontallastverhältnis kann für Schüttgüter z.B. zwischen 0.3 und 0.6 liegen. Angesichts der beschriebenen Komplexität des Verhaltens von Schüttgütern, der grossen Vielzahl von beeinflussenden Parametern und den fehlenden exakten Verfahren zur Bestimmung deren physikalischer Einflüsse in Relation zu einer spezifischen Dosiervorrichtung, ist es im Stand der Technik nicht oder kaum möglich, Dosiervorrichtungen so bereitzustellen, dass diese Schwankungen effektiv ausgeglichen werden können und eine stabile Förderkurve mit der Dosiervorrichtung erreicht wird.

Wie oben diskutiert, hängen die Verfahren des Standes der Technik zur Optimierung von Dosiervorrichtung (d.h. der Optimierung der Stabilität der Förderkurve für die einzelnen Komponenten einer Rezeptur Minimierung von Inkonsistenzen in der Fördergeschwindigkeit, der Fördermenge, und der Dosiergenauigkeit) nicht nur die Messparameter des Schüttgutes und damit seine physikalischen Eigenschaften und Verhaltenscharakteristiken in den Schnecken und Silos ab, sondern auch von den Eigenschaften und technischen Aufbau der Förderschnecke bzw. etwaigem anderem Fördersystem und dem verwendeten Zuführsilo. Um eine Optimierung zu erreichen muss folglich bekannt sein, welche Betriebsparameter der Dosiervorrichtung wie optimiert werden kann, so dass die Stabilität der Förderkurve für die einzelnen Komponenten einer Rezeptur erhöht wird bzw. Inkonsistenzen in der Fördergeschwindigkeit, der Fördermenge, und der Dosiergenauigkeit minimiert werden. Diese Zusammenhänge der vielen Parameter sind jedoch komplex. Im Stand der Technik geschieht die Optimierung deshalb typischerweise empirisch durch einen Operateur der Anlage, der die Dosiervorrichtung basierend auf seinen Erfahrungswerten korrigiert. Ebenfalls bekannt sind annäherungsweise Verfahren, z.B. basierend auf Klassifizierungen Eigenschaften der Silos und/oder der Fördervorrichtung und/oder der Schüttgüter. Beispielsweise wird eine kombinierte Klassifizierung der Auslegung von Lagerbehältern von Schüttgütern wie Silos in Zusammenhang mit der Beschreibung der Fliessfähigkeit von Schüttgütern vorgeschlagen. Diese Klassifizierung vereinfacht die physikalischen Zusammenhänge auf zwei Möglichkeiten, aufgrund deren ein Schüttgut am Fliessen gehindert werden kann, nämlich Brücken- und Schachtbildung. Wird ein Behälter so konstruiert, dass keines von beiden auftreten kann, so stellt sich ein ideal Fliessverhalten in Bezug auf die Anlage ein.

Schächte können entstehen, wenn ein Schüttgut beim Entleeren aus einem Behälter nicht gleichmässig fliesst. Dies ist der Fall, wenn die Trichterwände zu flach oder zu rau sind, sodass das Schüttgut zunächst nur im Kern und nicht an der Wand fliesst. Beim Entleeren bildet sich ein Trichter, in dem das Material von der Wand zum Kern nachfliesst. Hat der Trichter die Auslauföffnung erreicht, bleiben tote Zonen an Material zurück, die das aktive Behältervolumen verringern. Bei zu kleinen Auslauföffnungen kann zusätzlich ein stabiler Schacht gebildet werden. Fliesst das gesamte Schüttgut gleichmässig, liegt Massenfluss vor. Dabei ist der Massenstrom weitgehend konstant, die Gefahr des Schiessens (des ungehinderten Ausfliessens) von Material ist vermindert und es wird zuerst das Schüttgut ausgetragen, das zuerst in den Behälter gelangte. Jedoch kann sich bei einer zu geringen Auslauföffnung eine stabile Schüttgutbrücke bilden, die ein weiteres Fliessen verhindert. Ob Kern- oder Massenfluss vorhanden ist, ist vom Neigungswinkel der Trichterwand gegen die Vertikale θ, dem Wandreibungswinkel ϕ_{w} und dem effektiven Reibungswinkel ϕₑ abhängig. Bei kohäsiven Schüttgütern muss zusätzlich die Bildung von stabilen Schüttgutbrücken vermieden werden. Dabei sind drei Spannungen für die Bildung einer Brücke entscheidend: (i) die grösste Hauptspannung als massgebende Verfestigungsspannung, (ii) die Schüttgutfestigkeit, und (iii) die Spannung, die in einer Brücke vorherrscht. Die Schüttgutfestigkeit stellt die Festigkeit einer vorhandenen Brücke dar. Sie ist von der Verfestigungsspannung abhängig und kann z.B. anhand von Scherversuchen experimentell bestimmt werden. Dieser Zusammenhang wird Fliessfunktion genannt. Die Spannung kann anhand des Gewichts der Schüttung, der Wandreibungsverhältnisse, der Wandneigung und der Brückenspannweite berechnet werden. Da die Brückenspannweite im Trichter eines Behälters linear abnimmt, nimmt auch die Spannung linear ab. Auch die grösste Hauptspannung ist proportional zum Trichterdurchmesser und würde in einer gedachten Trichterspitze den Wert 0 betragen. Somit kann ein Fliessfaktor ff zwischen der Verfestigungsspannung und der Spannung in der Brücke gebildet werden. Durch die Bildung des Fliessfaktors kann der Einfluss des auf der Brücke aufliegenden Gewichtes eliminiert werden, sodass dieser in Abhängigkeit des effektiven Reibungswinkels des Schüttguts, des Wandreibungswinkels zwischen Schüttgut und Trichterwand und der Wandneigung gegenüber der Vertikalen θ in entsprechenden Diagrammen aufgetragen werden kann. Die ersten beiden Werte können z.B. wie die Fliessfunktion aus Scherversuchen gewonnen werden. Dabei ist der effektive Reibungswinkels rein vom Schüttgut abhängig, während der Wandreibungswinkels auch vom Wandmaterial und der Wandrauigkeit beeinflusst wird. Der Wandneigungswinkel ist dagegen rein konstruktionsbedingt. Eine Schüttgutbrücke kann aufrechterhalten werden, solange die Auflagerspannung geringer ist als die Schüttgutfestigkeit. Das bedeutet, dass das Material zu fliessen beginnt, sobald die Auflagerspannung die Schüttgutfestigkeit erreicht. Dadurch, dass die Verdichtungsspannung bis zur gedachten Trichterspitze gegen 0 geht, kann anhand des Abstands zur Spitze der minimale Durchmesser der Auslauföffnung ermittelt werden, der ein ungehindertes, ideales Ausfliessen gewährleistet. Eine ähnliche Vorgehensweise wie für die Brückenbildung wird bei der Schachtbildung vorgenommen. Zu beachten ist, dass bei diesem Verfahren des Standes der Technik das Schüttgut annäherungsweise als stetig fliessend angenommen wurde. Wird dagegen für eine längere Zeit kein Schüttgut aus dem Behälter ausgetragen, kann sich dieses mit der Zeit verfestigen, wodurch es eher zu Brückenbildung neigt.

Zur Ermittlung der Fliessfähigkeit von Schüttgütern wird in den Verfahren des Standes der Technik typischerweise davon ausgegangen, dass je kohäsiver ein Schüttgut ist, desto höher ist die Schüttgutfestigkeit. Dadurch verschlechtert sich die Fliessfähigkeit des Schüttguts. Da jedoch die Schüttgutfestigkeit f von der Verfestigungsspannung *σσ* abhängt, muss bei diesen Verfahren zum Vergleich von Schüttgütern stets die gleiche Verfestigungsspannung Anwendung finden. Die Verwendung des Spannungsniveaus am Behälterauslauf ist deshalb ratsam. Mit diesem Verfahren kann analog des Fliessfaktors das Verhältnis zwischen der Verdichtungsspannung und der Schüttgutfestigkeit gebildet und so der Wert der Fliessfunktion bei dieser Verdichtungsspannung bestimmt werden kann. Dem erhaltenen Wert der Fliessfunktion kann dann eine Fliessfähigkeit zugeordnet werden, wobei zu beachten ist, dass ein Schüttgut, dass bei einer Verdichtungsspannung als gut fliessend eingeordnet wird, bei einer anderen als kohäsiv gelten kann.

Andere Verfahren des Standes der Technik zur Klassifizierung ermitteln anhand der Komprimierbarkeit des Schüttguts dessen Kohäsion. Die Komprimierbarkeit stellt dabei den Quotienten aus Stampfdichte und Schüttdichte dar. Es existieren mehrere Möglichkeiten, die beiden Dichten zu bestimmen. Bei den unterschiedlichen Methoden werden auch leicht unterschiedliche Dichten erhalten, sodass die daraus erhaltenen Komprimierbarkeiten kaum miteinander vergleichbar sind. Werden jedoch die Schüttgüter mit derselben Methode klassifiziert, können anhand der Komprimierbarkeit Aussagen zur Fliessfähigkeit getroffen werden. Dabei gilt: Je höher die Komprimierbarkeit ist desto höher die Kohäsion. Der Grund dafür ist, dass kohäsive Materialien eine so starke Partikel-Partikel-Reibung besitzen, die der Schwerkraft entgegenwirkt, dass sich Hohlräume bilden. Das Aufstampfen führt zu einem Springen der Partikel, wodurch sie den gegenseitigen Kontakt verlieren und sich die Reibung verringert. Infolgedessen können die Hohlräume zumindest zum Teil geschlossen werden. Je mehr sich ein Schüttgut verdichten lässt, desto mehr Hohlräume sind vorhanden und desto kohäsiver ist das Schüttgut. Da sich die Partikel während der Messung bewegen, eignen sich diese Klassifizierungen bei der Bestimmung der Reibung eher für ein fliessendes Schüttgut als für ein ruhendes. Die bisher diskutierten bekannten Klassifizierungsmethoden sind eher dafür geeignet, das Schüttgutverhalten im Dosierbehalter zu bestimmen. Es gibt jedoch auch Verfahren zum Bestimmen des Verhaltens in der Dosierschnecke oder im Übergangsbereich zwischen Behälter und Schnecke, wie z.B. der sog. Stempelmessung. Während der Messung wird mittels eines Stempels das zu untersuchende Schüttgut aus einem locker aufgeschütteten Schüttgutverband herausgehoben und somit eine Schachtbildung simuliert. Dadurch kann das Verhalten des Schüttguts über der Dosierschnecke nachgestellt werden, indem überprüft wird, wie gut das Schüttgut in die Schnecke fliesst. Gut fliessende Schüttgüter sollten keinen stabilen Schacht bilden. Das Schüttgut fliesst in einem Kern- oder Massenfluss um einen entstehenden Kanal direkt zu füllen. Somit würde sich auch ohne Zuhilfenahme eines Rührers das Schüttgut ungehindert an die Dosierschnecke gelangen. Schlecht fliessende Schüttgüter bilden einen stabilen Schacht in dem kein Schüttgut fällt. Somit würde, sobald sich einmal ein Schacht von der Dosierschnecke bis zur Materialoberfläche gebildet hat, kein Schüttgut mehr zur Schnecke gelangen und der Schüttgutstrom würde ohne Hilfe eines Rührers versiegen. Bei einem mässig fliessenden Schüttgut wäre demnach ein Verhalten zwischen gut und schlecht fliessenden Schüttgütern zu erwarten. Dementsprechend würde eine Schachtbildung beginnen, bis der Schacht wieder in sich zusammenbricht. Demzufolge würde kurzeitig kein Schüttgut in eine Dosierschnecke gelangen, bis sie bei einem Schachteinsturz wieder gefüllt wird. Daraus würde ein pulsierender Schüttgutstrom resultieren. Damit kann annähernd die Fliessfähigkeit und das Dosierverhalten der Schüttgüter bestimmt werden. Weitere im Stand der Technik bekannt Klassifizieren dienen weiteren Eigenschaften, wie z.B. der Beurteilung der Fluidisierbarkeit von Schüttgütern in Wirbelschichten.

Alle Verfahren des Standes der Technik zur Klassifizierung von Schüttgütern besitzen einen anderen technischen Ansatz oder Simulationstechnik. So basieren die einen auf der Spannung, die notwendig ist, um ein ruhendes Schüttgut in den fliessenden Zustand zu überführen. Dagegen versuchen andere zu erfassen, wie stark sich ein locker aufgeschüttetes Schüttgut komprimieren lässt. In der Stempelmessung wird gemessen, ob ein Schüttgut beim Dosieren dazu neigt, einen stabilen Schacht zu bilden. Weitere Verfahren basieren auf oder betrachten Fluidisationsverhalten von Schüttgütern in Wirbelschichten. Zusätzlich existieren diverse weitere technische Ansätze um den Einfluss der Messparameter und der Anlagecharakteristiken einer Dosiervorrichtung auf die Stabilität der Förderkurve für die einzelnen Komponenten einer Rezeptur und auf Inkonsistenzen in der Fördergeschwindigkeit, der Fördermenge, und der Dosiergenauigkeit technisch zu erfassen und bei der Optimierung der Analgesteuerung der Dosiervorrichtung zu anzuwenden. Ein weiteres Problem liegt darin, dass ein Schüttgut nicht eindeutig als freifliessend oder schlecht fliessend klassifiziert werden kann, was die Verwendung dieser Verfahren zur Optimierung der Anlagesteuerung einschränkt. Alle diese Klassifizierungen müssen stets an den Zustand angepasst werden, in dem sich das Schüttgut gerade befindet. Somit ist kein Verfahren bekannt, nach der das Fliessverhalten von Schüttgütern in Schneckendosierern als einheitliches System erfasst wird und zur Optimierung der Analgesteuerung verwendet werden kann. Ziel ist es mittels der Klassifizierungsmethoden das Verhalten der Schüttgüter entlang ihres Fliessweges durch den Schneckendosierer vorherzusagen, um eine geeignete Analgesteuerung bereitzustellen. Dies ist mit den Verfahren des Standes der Technik jedoch nicht oder nur bedingt möglich.

Schliesslich ist darauf hinzuweisen, dass die präzise kontinuierliche Dosierung von fliessenden Schüttgütern eine vergleichsweise grössere Herausforderung darstellt als bei anderen Dosierungen. Einerseits werden die Genauigkeitsanforderungen an die Dosierung von Produkten auch mit schlechtem Fliessverhalten und bei niedrigen Durchsatzleistungen höher. Andererseits sind die Dosierwaagen optimal in die teilweise komplexen Gesamtprozesse zu integrieren. Häufig sind prozessbedingte Druckunterschiede und spezielle Betriebsweisen sowie externe Störeinflüsse zu beachten und zu berücksichtigen. Damit sind die Anforderungen an kontinuierliche Schüttgutdosierer ungleich höher als z.B. an Dosierer, die im Chargenbetrieb arbeiten. Während der Chargendosierer in der Regel erst am Ende des Dosiervorgangs das Sollgewicht mit der geforderten Genauigkeit erreichen soll, muss der kontinuierliche Dosierer ständig die geforderten Genauigkeitsgrenzen pro Zeiteinheit einhalten. Die Genauigkeitsmessungen bzw. -angaben können z.B. mit Bezug auf die Empfehlungen gemäss dem Namur-Arbeitsblatt NA 40 erfolgen. Demnach werden Dosierkonstanz Sₖ (= Schwankung des Ist-Wertes um den tatsächlichen Mittelwert) und Dosiergenauigkeit S_{d} (=systematische Abweichung des Mittelwertes des Ist-Wertes vom Sollwert) auf der Basis von 30 Messungen mit jeweils 1 min Messzeit berechnet. Jedoch ist es denkbar, dass aufgrund einer kurzen Verweilzeit des Schüttgutes in einem einer Dosierwaage nachgeschalteten Prozess, der Bezugszeitraum für die Messung der Dosiergenauigkeit verkürzt werden muss. Dies bringt die Notwendigkeit mit sich, die Genauigkeiten mit genauen Kontrollwaagen mit kurzen Reaktionszeiten sowie einer schnellen Messdatenaufnahme zu erfassen. Werden dann auch noch die Forderungen an Dosierkonstanz und Dosiergenauigkeit verschärft, kann sich die Gesamt-Genauigkeitsanforderung wesentlich erhöhen. Damit lassen sich Genauigkeiten an verschiedenen Stellen des Prozesses definieren. In den Spezifikationen vieler Schüttgüter finden sich Angaben über Dosierleistungsbereiche. Grundsätzlich lässt sich bei einem volumetrischen Schneckendosierer ein breiter Bereich realisieren. Dies setzt jedoch voraus, dass das Schüttgut eine gute Fliessfähigkeit besitzt und sich die Dosierschnecke gleichmässig füllt. Insbesondere bei volumetrischen Dosiergeräten bietet sich die Option an, den Dosierleistungsbereich sowohl in niedrigere als auch höhere Dosierbereiche durch Wechsel der Dosiergarnitur zu verschieben, was bei Mehrproduktanlagen und kurzen Lebenszyklen von Produkten ein Vorteil sein kann. Bei gravimetrischen Dosiersystemen können engere Grenzen gesetzt sein. Ist die Dosierleistung und damit die Entnahmemenge aus dem Wägebehälter zu niedrig, ist es möglich, dass die Wägetechnik der Dosiersteuerung keine signifikante Abnahme der Masse melden kann, wodurch der Steuerung ausreichende Eingangsparameter zur Regelung fehlen. Ist die Dosierleistung im oberen Grenzbereich, muss der Wägebehälter nach einer vergleichsweise kurzen Phase der gravimetrischen Dosierung wieder befüllt werden. In dieser Zeit erfolgt keine Wägung und damit auch nur ein volumetrischer Betrieb des Dosiersystems. Je höher die Dosierleistung für eine gegebene Dosierwaagengrösse gewählt wird, desto länger sind also die Phasen, in denen keine gravimetrische Dosierung erfolgt. Zudem können u. a. Impulskräfte aufgrund der häufigen Wiederbefüllungen das Dosierergebnis verschlechtern. Bei der gravimetrischen Dosierung gibt es also einen optimalen Leistungsbereich, in dem die Genauigkeit einen fast konstanten Wert erreicht. Am unteren und oberen Leistungsbereich nimmt diese aus den genannten Gründen ab. Ein Verfahren für eine elektronische Anlagensteuerung für eine Optimierung einer Schüttgutdosierung gemäß dem Stand der Technik ist in DE 28 10 810 A1 offenbart.

### Darstellung der Erfindung

Es ist Aufgabe der vorliegenden Erfindung eine Dosiervorrichtung mit optimierter Förderkurve (d.h. geförderte Menge über die Zeit) bereitzustellen, beispielsweise mit einer stabilen Förderkurve innerhalb definierter Toleranzwerte, bei der jede einzelne Komponente einer Rezeptur immer gleich sind (innerhalb der Toleranzwerte) oder annähernd gleich sind. Insbesondere soll die optimierte Dosiervorrichtung die diskutierten Nachteile des Standes der Technik nicht aufweisen, Weiter soll es mit der erfindungsgemässen Dosiervorrichtung möglich sein, allfällige Abweichungen von den erwartenden Fliesseigenschaften z.B. durch äussere Einflüsse wie Art des Rohmaterials, Feuchtigkeit, lokale Temperaturverteilung, Verklumpung, natürliche Schwankungen des Rohmaterials, Geometrie des Silos, zu erkennen und automatisiert auszugleichen. Weiter sollen Inkonsistenzen in der Fördergeschwindigkeit, der Fördermenge und damit der Dosiergenauigkeit erkannt und ausgeglichen bzw. optimiert werden.

Gemäss der vorliegenden Erfindung werden diese Ziele durch ein Verfahren gemäß dem unabhängigen Anspruch 1 erreicht. Weitere vorteilhafte Ausführungsformen gehen ausserdem aus den abhängigen Ansprüchen hervor.

### Kurz Beschreibung der Zeichnung

Im Folgenden wird die Erfindung anhand von Figuren beispielhaft erläutert. Gleiche Gegenstände sind in den Figuren grundsätzlich mit gleichen Bezugszeichen bezeichnet.

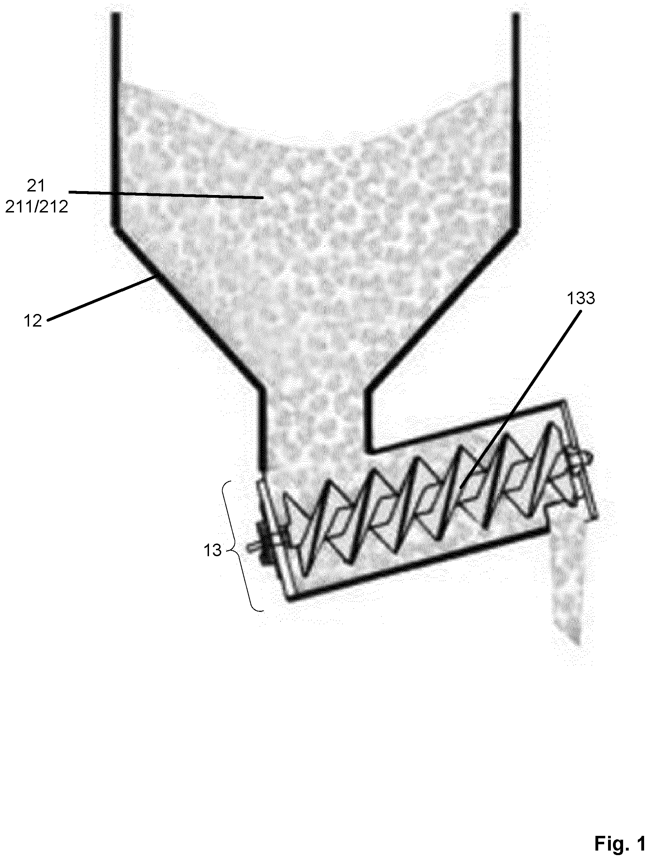

Figur 1 zeigt eine schematische Darstellung einer Dosier-Schnecke des Standes der Technik. Bei Schneckendosierern wird das Material aktiv mit einer Förder-Spindel (Schnecke) dosiert und zugleich zum Auslass gefördert. Die Schnecke ist dabei von einem Hüllrohr umschlossen. Ausschlaggebend für die Dosiermenge sind der Schneckendurchmesser, die Steigung der Schnecke und die Drehzahl. Um zu vermeiden, dass Material unkontrolliert nachfliesst, arbeiten Schneckendosierer vielfach nach schräg oben. Schnecken-Dosierungen tragen das Material kontinuierlich aus. Sie eignen sich für volumetrische und gravimetrische Dosiersysteme.

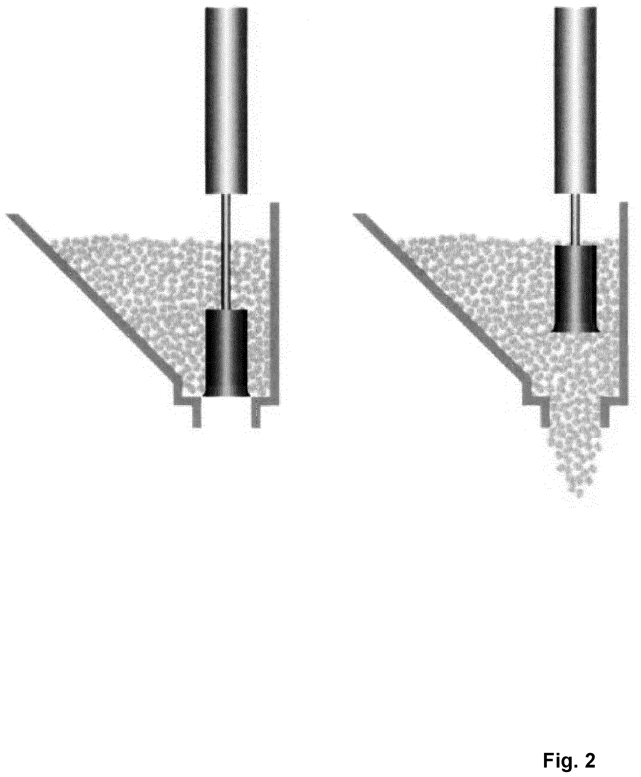

Figur 2 zeigt eine schematische Darstellung eines Dosier-Konus (links geschlossen und rechts geöffnet) des Standes der Technik. Bei der Konus-Dosierung fliesst das Material passiv aus dem Vorratsbehälter. Zusammen mit dem Zylinder bildet der Konus hierfür ein Ventil, das den Materialfluss freigibt oder stoppt. Der Materialaustrag kann sowohl kontinuierlich als auch pulsierend erfolgen. Die Dosiermenge wird von Konusquerschnitt, Hubhöhe und Öffnungsdauer bestimmt. Aufgrund der vertikalen Arbeitsweise des Kolbens eignen sich Konus-Dosierer für leicht bis schwer fliessende oder Brücken bildende Schüttgüter.

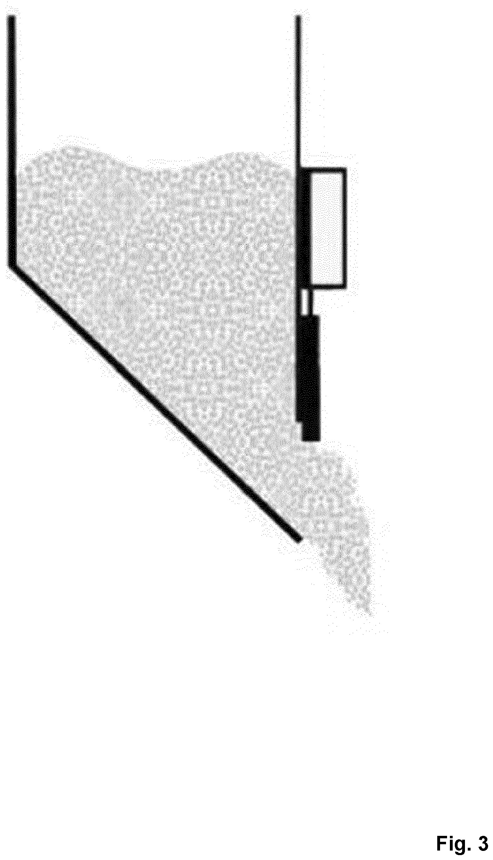

Figur 3 zeigt eine schematische Darstellung eines Dosierschieber des Standes der Technik. Bei der Schieber-Dosierung fliesst das Material passiv aus dem Vorratsbehälter. Der Schieber steuert den Materialaustrag und kann vertikal oder horizontal angeordnet sein. Der Materialaustrag erfolgt kontinuierlich oder pulsierend, wobei der Schieberquerschnitt und die Öffnungsdauer die Dosiermenge bestimmen.

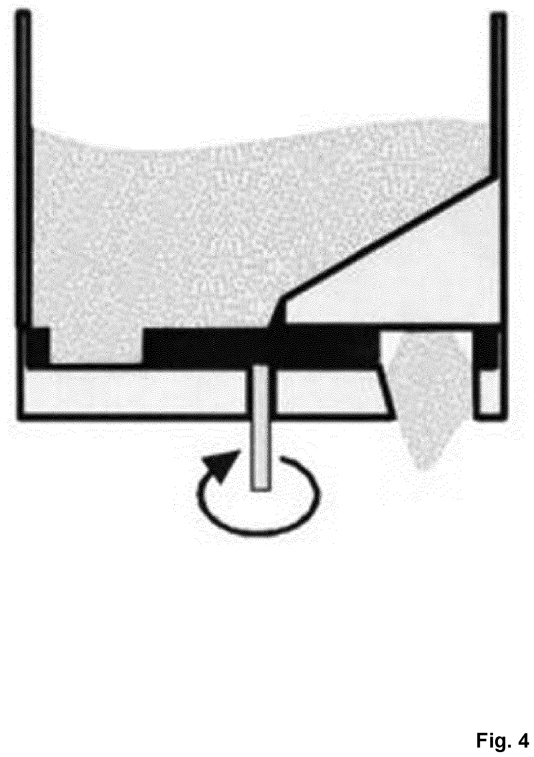

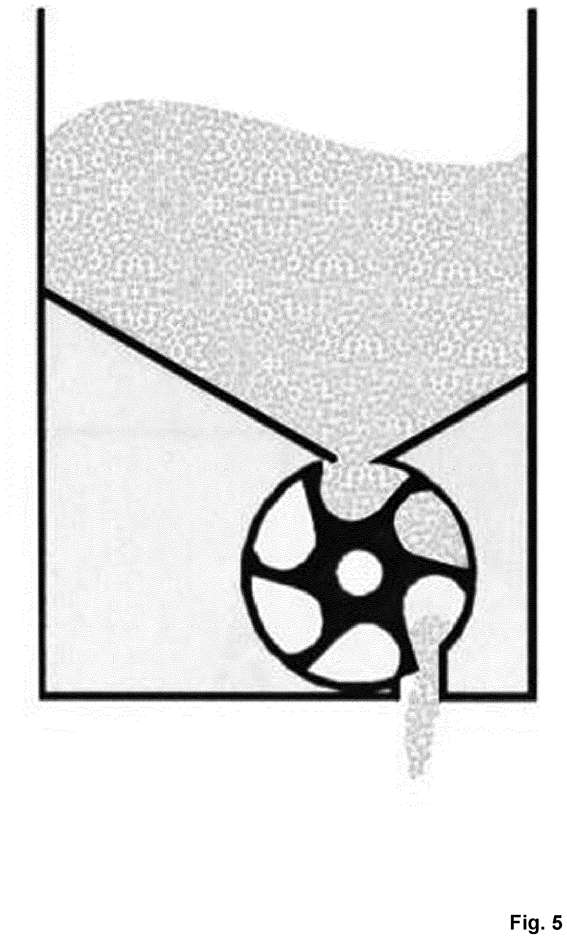

Figur 4 zeigt eine schematische Darstellung einer Dosierscheibe des Standes der Technik und Figur 5 eine schematische Darstellung eines Zellenrad des Standes der Technik. Die Verfahrensweise von Scheibendosierern und Rad-, Walzen- oder Zellrad-Dosierorganen ist vom Prinzip her identisch: Sie dosieren das Material aktiv und volumenabgrenzend (in Kammern). Überschüssiges Material (Schüttkegel) hält ein Abstreifer zurück.

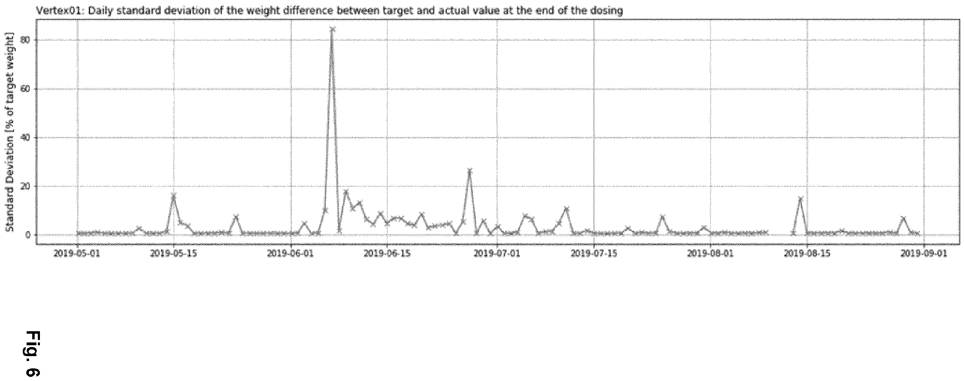

Figur 6 zeigt eine Darstellung der Analyse des relativen Dosierfehlers (täglicher Mittelwert) pro Waage. Rudimentäre Anomalie- oder Fehlererkennung über Thresholding. Das Diagramm zeigt die Zeitachse (x-Achse) gegen die Standard Abweichung (% des Zielgewichts) dargestellt.

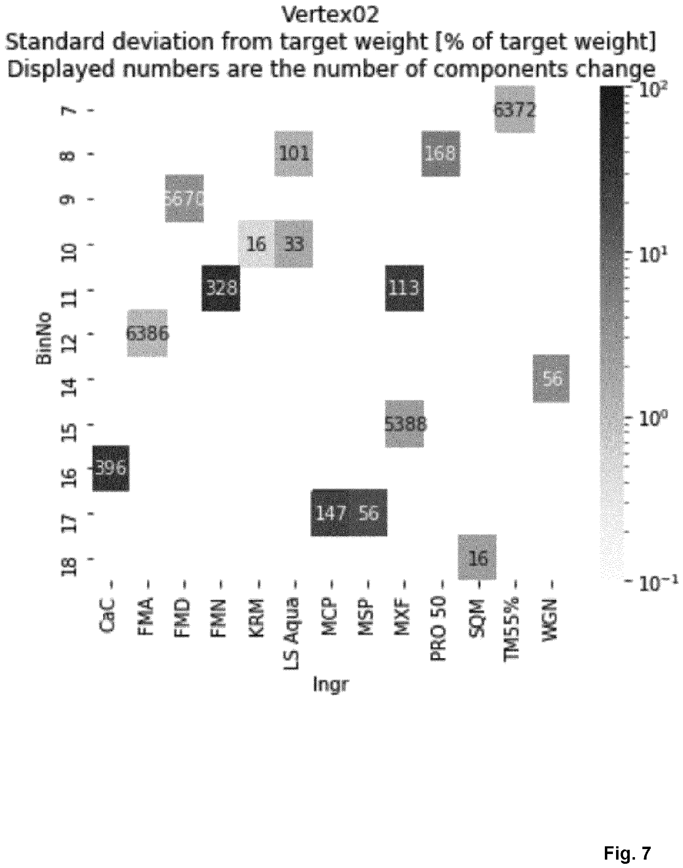

Figur 7 zeigt eine Darstellung der Heatmap - Dosiergenauigkeit (je dunkler desto schlechter) über Silo-Nr. (vertikale Achse) und Zutat / Komponente (horizontale Achse). Dies ermöglicht eine Aussage, welche Produkt-Silo-Kombination beste Dosiergenauigkeiten liefert. Das Diagramm zeigt die Standardabweichung vom Zielgewicht (% des Zielgewichts).

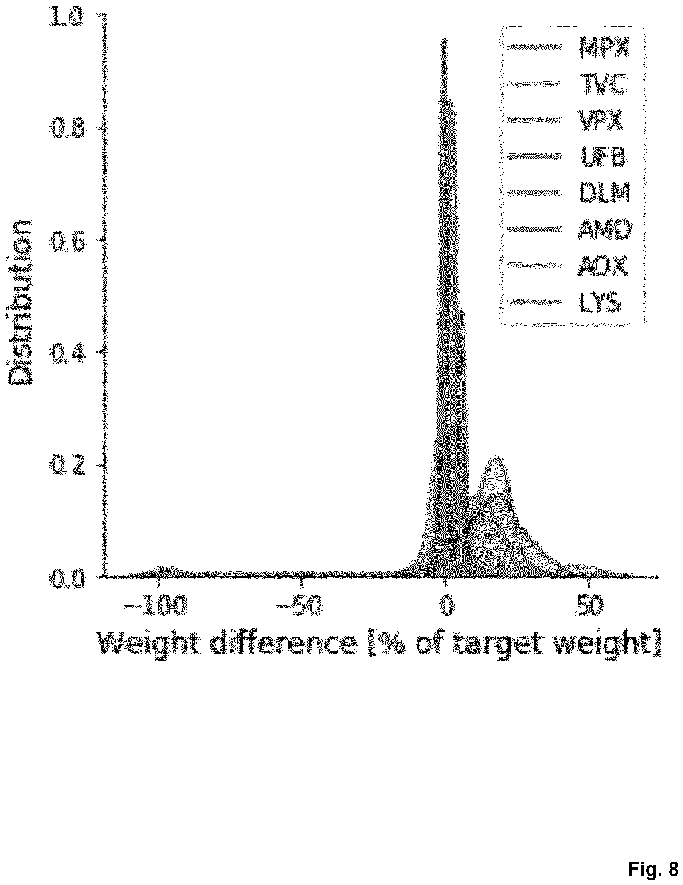

Figur 8 zeigt eine Darstellung des Histogramm der Dosiergenauigkeit für alle Komponenten. Dies zeigt auf, für welche Komponenten die Dosierparameter angepasst werden müssen. Eine KI kann hierauf und auf Figur 2 basierend die richtigen Parameter für jede Komponente empfehlen. Das Diagramm zeigt die Gewichtsdifferenz (% des Zielgewichts) gegen die Verteilung dargestellt.

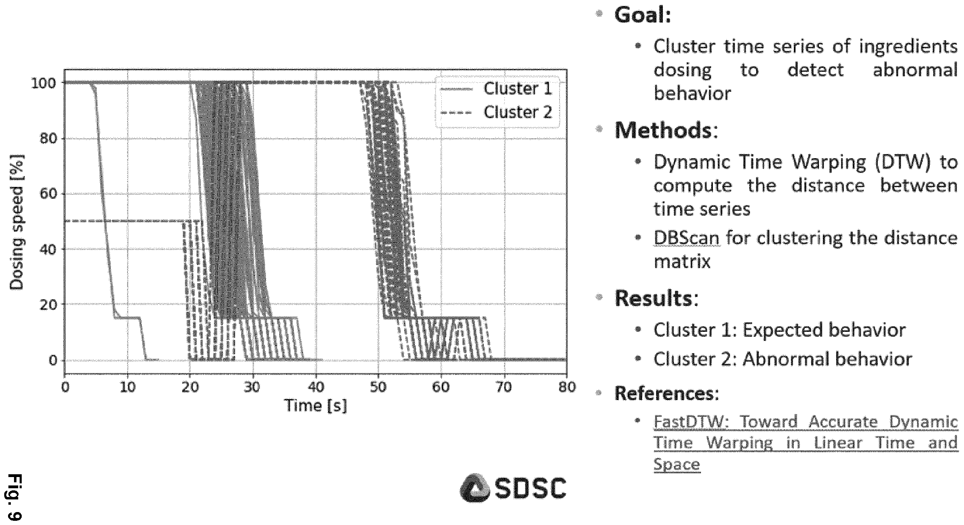

Figur 9 zeigt eine Darstellung der Anomalie-Analyse der Förderkurve, d.h. der Dosierleistung über Zeit. Dadurch kann jeder einzelne Dosiervorgang einem statistischen Cluster (normal, anomal) zugeordnet werden. Das Verhalten von Fehlzuständen kann hinterlegt werden, so dass eine Klassifizierung des Fehlzustandes möglich ist. Dies ist die Grundlage für eine Künstliche lntelligenz(KI)-basierte Optimierung der Dosierregelung in Kombination mit Figur 7 und Figur 8. In dem Diagramm wird die Zeit in Sekunden (s) gegen die Dosiergeschwindigkeit (in %) dargestellt. Der grün mit einer durchgezogenen Line angezeigte Cluster/Muster ist normal für die Dosierung. Der rot und gestrichelt angezeigten Cluster/Muster zeigt abnormes Verhalten bei der Dosierung. Beim abnormen Cluster/Muster fährt die Steuerregelung zuerst die Dosiergeschwindigkeit zurück, um sie dann überproportional zu erhöhen und schliesslich wieder auf 0 zurückzufahren. Die Erkennung der abnormen Cluster/Muster kann z.B. mit einem künstlichen intelligenz-basierten Modul, wie einen maschinen-lern basierten Modul oder einem neuronalen Netzwerk basierten Modul, erfolgen, insbesondere supervised oder non-supervised. Mittels Dynamic Time Warping kann dabei z.B. die Distanz zwischen den Zeitserien generiert werden. Schliesslich kann ein DBScan für das Clustering der Distanzmatrix verwendet werden. Das Ziel ist die Erkennung von Cluster-Zeitserien der Ingredienzen um abnormes Verhalten zu detektieren.

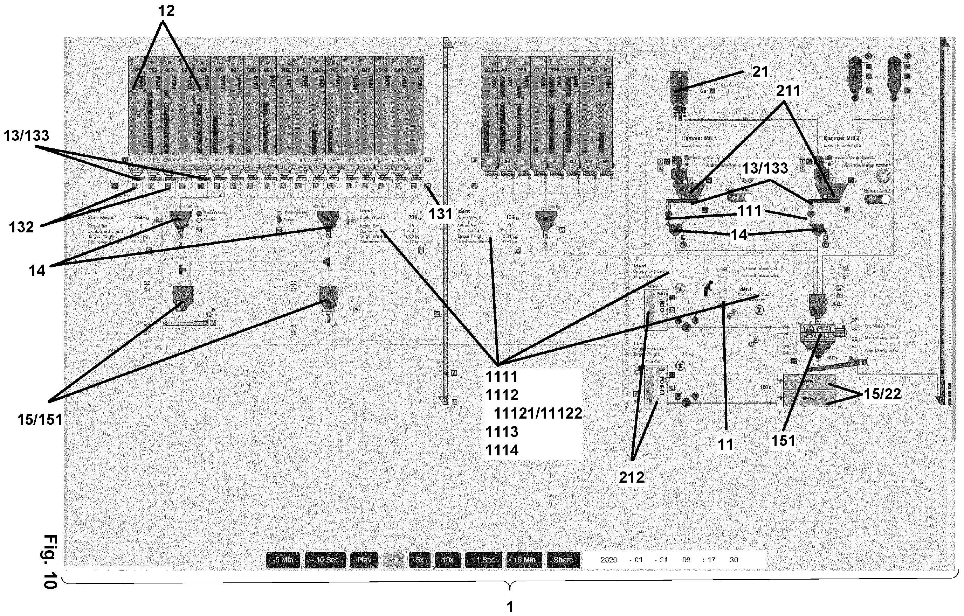

Figur 10 zeigt eine schematisch Darstellung der Anlagesteuerungen. Die grün und trichterförmig dargestellten Dosiereinheiten sind in Betrieb, während die rot dargestellte Dosiereinheit gerade nicht in Betrieb ist.

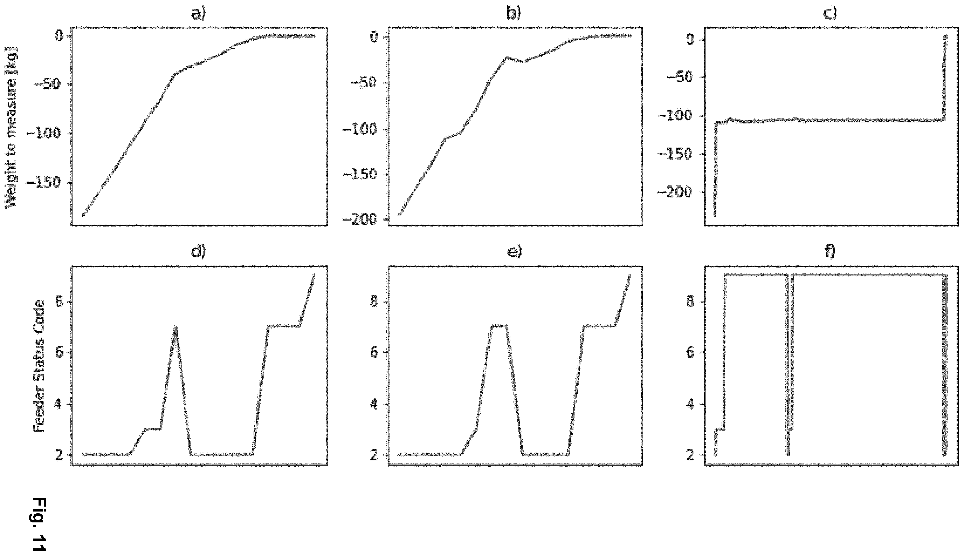

Figur 11 zeigt eine schematisch Darstellung einer beispielshaften Dosierung von drei Zutaten, wobei die Diagramme a und b die Entwicklung des Standardgewichts zeigen, und die Diagramme d und e den Statuscode des Dosierelements. Die Diagramme c und f zeigen eine anomale Dosierung.

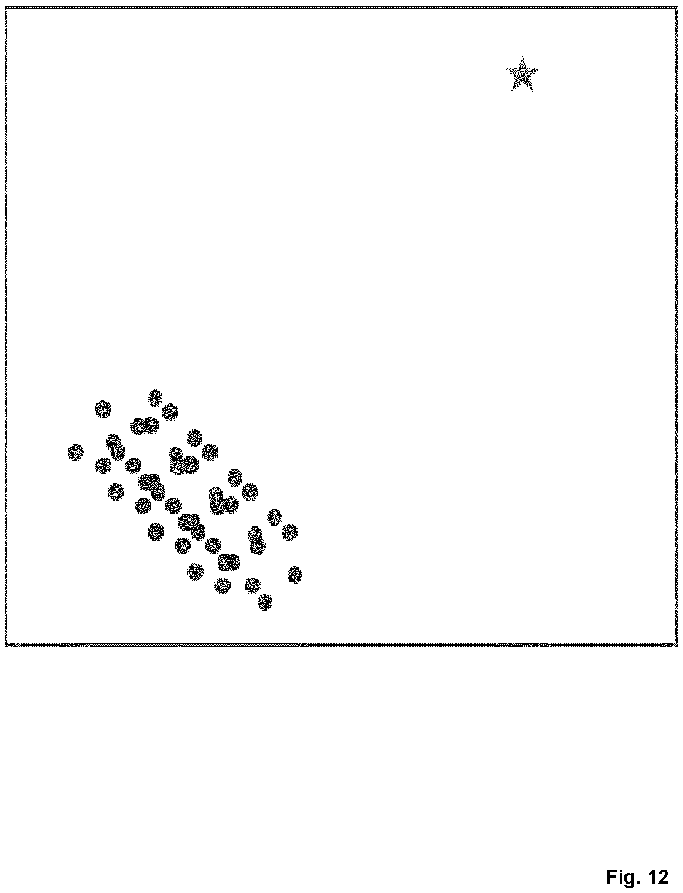

Figur 12 zeigt eine schematisch Darstellung einer beispielshaften 2D-Darstellung des latenten Raums. Normale Dosierungen sind innerhalb des blau eingekreisten Clusters gruppiert und die anomale (roter Stern) ist isoliert.

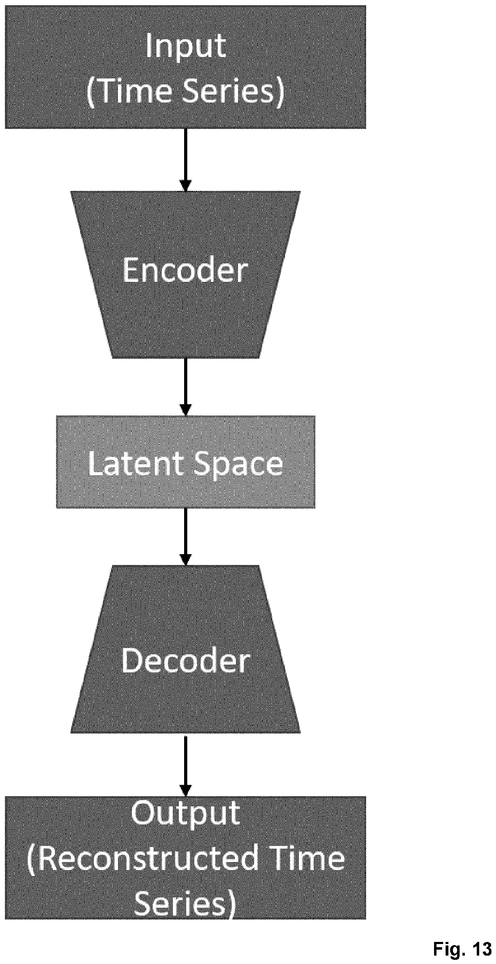

Figur 13 zeigt eine schematisch Darstellung einer Autoencoder-Architektur. Das Netzwerk wird auf unüberwachte Weise trainiert (unsupervised learning), so dass das Eingangssignal zunächst in den niedrigdimensionalen latenten Raum umgewandelt und vom Decoder mit minimalem Informationsverlust rekonstruiert werden kann.

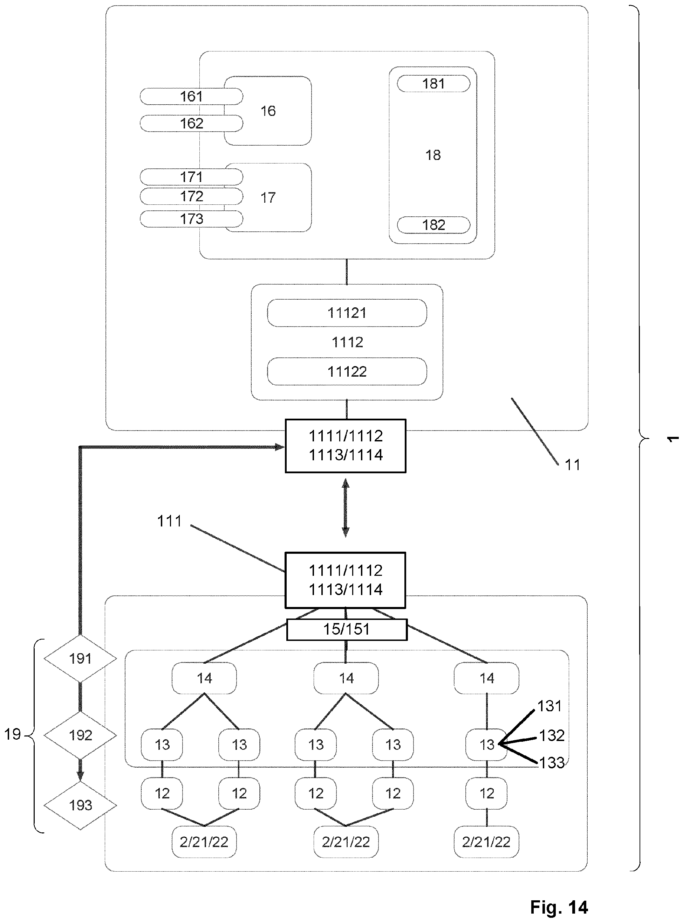

Figur 14 zeigt eine Blockdiagramm, welches schematisch eine beispielhafte Dosiervorrichtungen 1 mit einer elektronischen Anlagesteuerung 11 zum optimierten Dosieren von Rohmaterialien 21, umfassend Schüttgut 211 oder anderes Gut wie insbesondere viskoses Gut 212, zu Mischgut 22 mittels einer Dosiervorrichtung 1, wobei die Dosiervorrichtung 1 ein oder mehrere Rohmaterialsilos 12, Fördervorrichtungen 13, Wägvorrichtungen 14 und Mischer 151 und/oder Auffangbehälter für das Mischgut 22 umfasst, wobei das Rohmaterial 21 über die Fördervorrichtungen 13 zum Mischer 151 und/oder Auffangbehälter 15 für das Mischgut 22 transportieren wird, wobei mittels der Wägvorrichtungen 14 die mittels der Fördervorrichtungen 13 geförderte Menge Rohmaterial gemessen wird und wobei eine oder mehrere mit den Wägvorrichtungen 14 verbundene elektronische Steuereinheiten 111 die Fördermenge 131 der Fördervorrichtungen 13 basierend auf Dosieranlageparametern 1111 regelt.

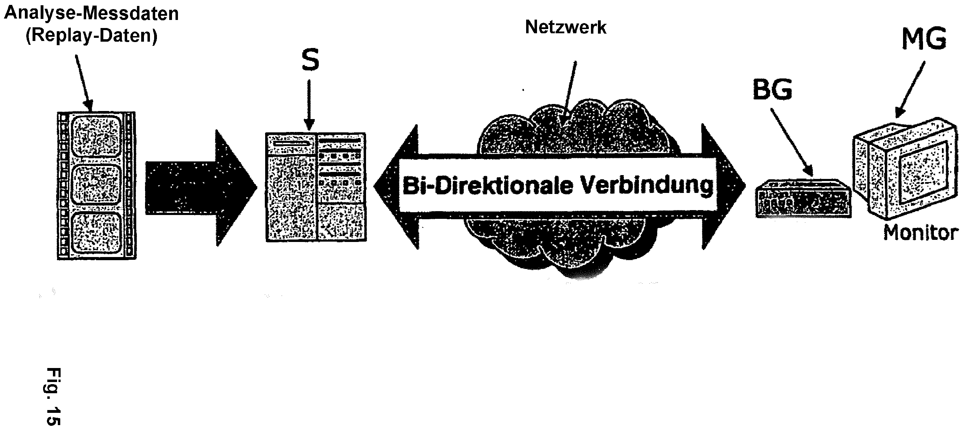

Figur 15 zeigt eine Blockdiagramm, welches schematisch eine beispielhafte Replay-Ausführungsvariante mit Bereitstellung von Analyse-Messdaten (als Replay-Daten) zum Überwachen eines Zeitabschnitts im Replay-Modus der Dosiervorrichtung 1. Die Analyse-Messdaten werden z.B. auf eines Speichermediums eines Servers (S) aufgezeichnet. Mittels einer Baugruppe (BG), die einen Client zum zeitverschobenen Abrufen von Analyse-Messdaten umfasst, wird z.B. mittels Zeit-Tag ein zeitlich zur Echtzeit verschobenen Abschnitt der Replay-Daten ausgewählt und z.B. mittels Request von Server S angefordert. Dieser stellt den angeforderten Zeitabschnitt des Replay-Datenstreams z.B. in Form von Multimedia-Datenpaketen zusammen und übermittelt sie über das Netzwerk an den Client der Baugruppe. Der Client entpackt die Multimedia-Datenpakete und stellt sie für den Benutzer auf dem Monitor M dar.

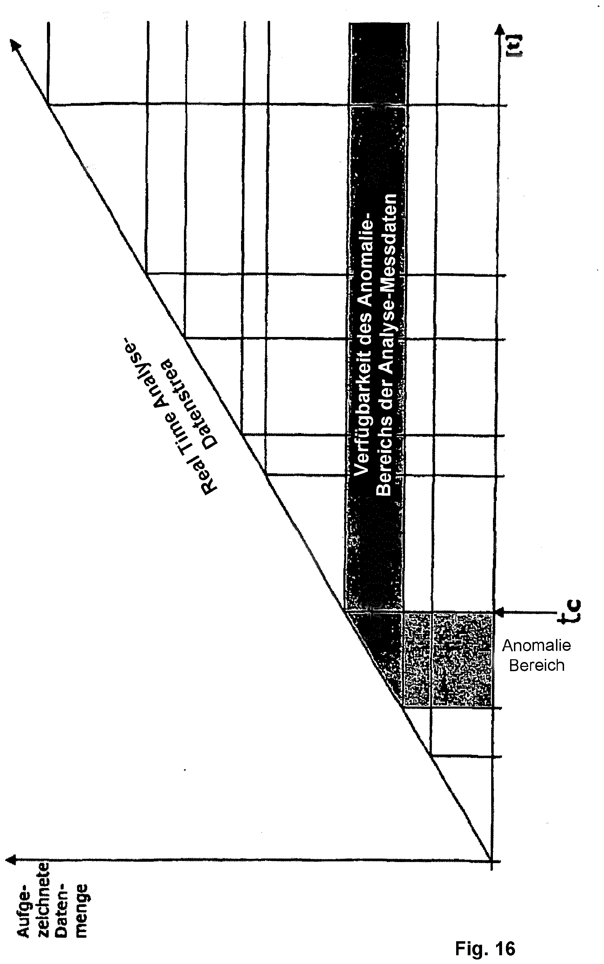

Figur 16 zeigt eine Blockdiagram, welches schematisch ein beispielhaftes Zeit-Datenmengen-Diagramm zeigt mit der Hervorhebung eines zum Abruf verfügbaren Zeitbereichs z.B. beinhaltend eine von der Vorrichtung detektierte Anomalie. Der gesamte Real Time Analyse-Datenstream kann aufgezeichnet werden oder nur Zeitbereiche des Analyse-Datenstream, d.h. der Replay-Daten, in welchen erste und/oder zweite Anomalie- und/oder Dosierfehlern 11121/11122 mittels der Dosiervorrichtung 1 detektiert wurden.

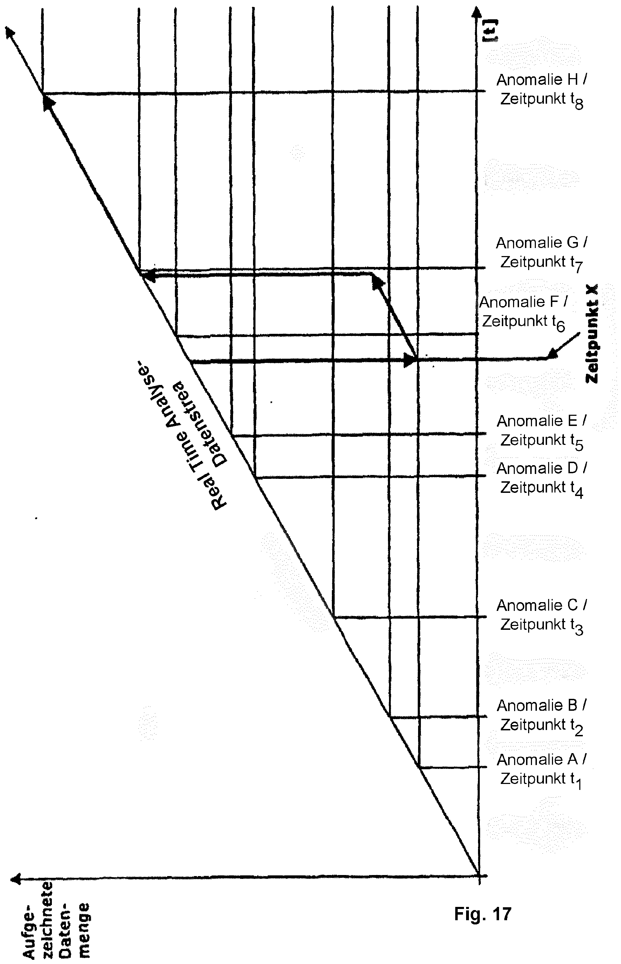

Figur 17 zeigt eine Blockdiagram, welches schematisch ein beispielhaftes Zeit-Datenmengen-Diagramm zeigt mit der Hervorhebung einer Wiedergabe eines in der Vergangenheit liegenden Anomalie-Bereichs. Wie in Figur 17 gezeigt, kann die erfindungsgemässe Ausführungsform auch so realisiert sein, dass der Benutzer an einen beliebigen, in der Vergangenheit liegenden Zeitpunkt des aufgezeichneten Analyse-Datenstream springen kann, also unabhängig von Anomalie-Detektionen. Auch kann der Benutzer z.B. über einen bestimmten Zeitbereich hinaus zeitverzögert sich die Analyse-Messdaten vom abgespeicherten Replay-Datenstream abrufen, an einem Zeitpunkt x einen Zeitbereich nach vorne (forward) oder nach hinten (rewind) im aufgezeichneten Datenstream springen.

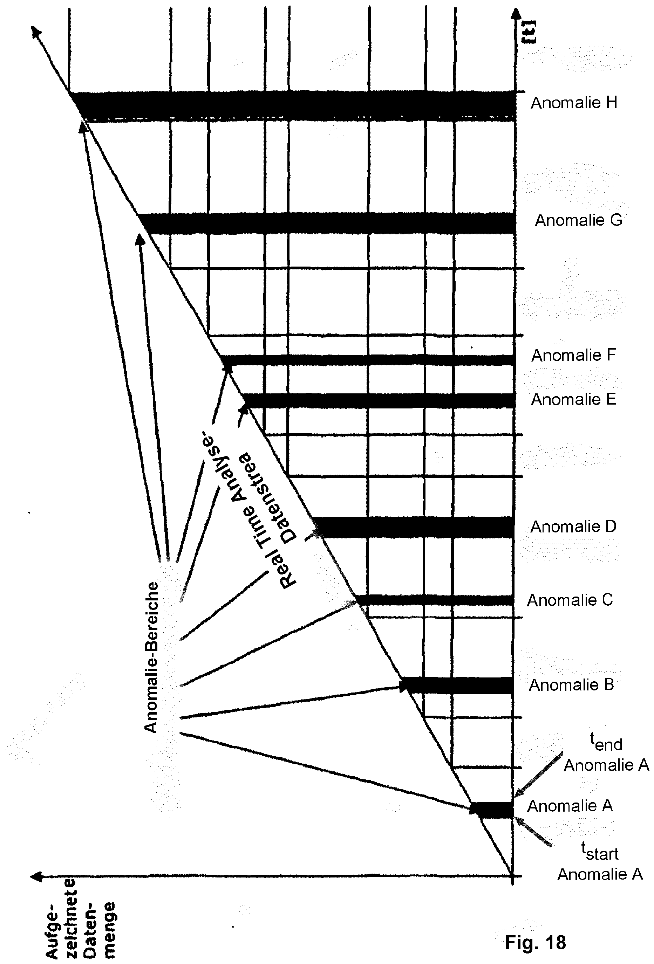

Figur 18 zeigt eine Blockdiagramm, welches schematisch ein beispielhaftes Zeit-Datenmengen-Diagramm zeigt, bei welcher Ausführungsform dem Benutzer z.B. über den Client auf der Baugruppe die detektierten Anomalie-Zeitbereiche zur Selektion angezeigt werden. Insbesondere kann eine weitere Ausführungsvariante so realisiert sein, dass die angeschlossene Vorrichtung, d.h. die Dosiervorrichtung 1, durch die elektronischen Anlagesteuerung 11 wieder genau in den Betriebsmodus mit den gleichen Betriebsparameter gesetzt werden kann, wie im detektierten Anomalie-Bereich. Die Dosiervorrichtung 1 kann so in real-time noch einmal durch den Anomalie-Bereich laufen gelassen werden, z.B. zu Test-, Optimierungs- oder anderen Überprüfungszwecken.

### Detaillierte Beschreibung der Erfindung

Die Figuren 5 bis 10 illustrieren schematisch Darstellungen einer erfindungsgemässen Ausführungsvariante, bei welchem Dosierverfahren und Dosiervorrichtung mit einer elektronischen Anlagesteuerung für die Dosiervorrichtung mit optimiertem Dosieren von Rohmaterialien, umfassend Schüttgut oder anderes Gut, zu Mischgut mittels einer Dosiervorrichtung, die Dosiervorrichtung ein oder mehrere Rohmaterialsilos, Fördervorrichtungen, Wägvorrichtungen und Mischer und/oder Auffangbehälter für das Mischgut umfasst. In vielen Prozessen (z.B. Futtermühlen, Bäckereien, Extrusionslinien etc.) ist die genaue Dosierung der zu verwendenden Schüttgut-Rohmaterialien für eine bestimmte Rezeptur sehr wichtig. Eine ungenaue Dosierung kann zu Einbussen in der Qualität und Sicherheit des Endproduktes führen. Das Rohmaterial wird über die Fördervorrichtungen zum Mischer und/oder Auffangbehälter für das Mischgut transportieren. Mittels der Wägvorrichtungen wird die mittels der Fördervorrichtungen geförderte Menge Rohmaterial gemessen. Eine oder mehrere mit den Wägvorrichtungen verbundene elektronische Steuereinheiten regeln die Fördermenge der Fördervorrichtungen basierend auf Dosieranlageparametern. Ein elektrischer Motor mit Getriebe kann z.B. zum Antrieb der jeweiligen Fördervorrichtung dienen, wobei mittels der Dosieranlageparameter der Motor mittels der Steuereinheit geregelt und so der gewünschte Massestrom eingestellt wird. Mindestens eine der Fördervorrichtung kann z.B. als Förderschnecke ausgebildet sein, wobei über die Regelung der Drehzahl der Förderschnecke der gewünschte Massenstrom eingestellt wird. D.h. bei Förderschnecken erfolgt die Dosierung über die Förderschnecken, die typsicherweise unter den Rohmaterialsilos angebracht sind. Das geförderte Produkt läuft dann in eine Waage, in der das Gewicht der geförderten Menge kontinuierlich bestimmt wird. Über die elektronische Steuerungseinheit der Waage wird die Förderschnecke angesteuert und die Fördermenge geregelt. Zur Optimierung dieses Prozesses können spezifische Dosierparameter hinterlegt sein.

Die Dosiervorrichtung misst relative Dosierfehler gegeben durch die gemessene Abweichung eines Mittelwert über eine Zeiteinheit des Gewichts des geförderten Rohmaterials pro Wägvorrichtung von einem Zielgewichtswert, Messen von zugeordneten Häufigkeitsverteilungen der skalierten relativen Dosierfehlern pro Wägvorrichtung und geförderten Rohmaterial, Messen von Dosierleistungen über die Zeit pro Fördervorrichtung und geförderten Rohmaterial als Zeitreihe von Messwerten von Dosierleistungen, und Messen von Dosiergeschwindigkeiten in Abhängigkeit der Zeit pro Fördervorrichtung und geförderten Rohmaterial. Mittels der Wägvorrichtungen kann z.B. das Gewicht des geförderten Rohmaterials kontinuierlich gemessen werden. Der relative Dosierfehler (gegeben durch den gemessenen Mittelwert des Gewichts des geförderten Rohmaterials pro Wägvorrichtung und Zeiteinheit) kann z.B. basierend auf der gemessenen Standardabweichung des gemessenen täglichen Mittelwerts des Gewichts in Gewichts-% des Zielgewichts getriggert werden. Die Zeiteinheit zum Messen relativer Dosierfehler kann z.B. gegeben sein durch die gemessene Abweichung des täglichen Mittelwert des Gewichts des geförderten Rohmaterials pro Wägvorrichtung von einem Zielgewichtswert. Allgemein zeichnen Analyse-Mess-Daten(sog. Replay-Daten), insbesondere entsprechende Sensordaten, der Anlagensteuerung jeden einzelnen Dosiervorgang jeder Komponente auf, insbesondere der diskutierten Dosierfehler, Dosierleistung, und Dosiergeschwindigkeit etc.. Die Analyse-Mess-Daten können z.B. Prozess-Messparameter und/oder Qualitätsmessparameter und/oder Umgebungsbedingungs-Messparameter und/oder Wartungsdaten und Messparameter der Anlage umfassen. Die Prozess-Messparameter können z.B. Messparameter der Anlagensteuerung (Gesamtüberblick über Anlage) beispielsweise umfassend Replay-Messparameter (Alle Messdaten der Visualisierung) und/oder Rezeptdaten und/oder Event-Daten (Logfiles, Events, Warnungen, Alarme) und/oder Parameter betreffend Produktionshistorie (Job-Log) und/oder Parameter betreffend geplanter Produktion (Job-Queue, ERP), weiter z.B. Parameter der Maschinensteuerung wie z.B. von Waagen, Einzelmaschinen, etc. (typischerweise sind mehr Daten/Messdaten für die spezifische Maschine verfügbar als in der Anlagensteuerung verwendet) und z.B. weitere Sensordaten umfassen. Die Qualitätsmessparameter können z.B. Rohmaterial-Messparameter und/oder Messparameter von Online/Inline-Sensoren und/oder Endprodukt Messparameter und/oder Kunden-initiierte Feedback-Daten/Parameter umfassen. Die Umgebungsbedingungs-Messparameter können z.B. Temperatur und/oder Luftfeuchte und/oder Wettervorhersage und/oder Luftdruck etc. umfassen. Schliesslich können die Wartungsdaten und Messparameter der Anlage z.B. Messparameter und Daten des Computerized Maintenance Management System (CMMS) und/oder Verschleiss-Messparameter und/oder Performance-Messparameter etc. umfassen.

Die Analyse dieser Daten erlaubt: (1) Statistische Auswertung der Dosiergenauigkeit zu diagnostischen Zwecken, insbesondere (1.1) Analyse der relativen Dosierfehlers (täglicher Mittelwert) pro Waage. Erste Anomalie- oder Fehlererkennung über Thresholding. (siehe weiter unten, sowie Figur 5); (1.2) Messen einer Heatmap - Dosiergenauigkeit (je dunkler desto schlechter) über Silo-Nr. (vertikale Achse) und Zutat / Komponente (horizontale Achse). Dies ermöglicht eine Aussage, welche Produkt-Silo-Kombination beste Dosiergenauigkeiten liefert, (siehe Figur 7); (1.3) Generieren eines Histogramms der Dosiergenauigkeiten für alle Komponenten. Dies kann z.B. aufzeigen, für welche Komponenten die Dosierparameter angepasst werden müssen. Die weiter unten diskutierte KI-Einheit (Künstliche Intelligenz) kann hierauf und auf (1.2) basierend die richtigen Parameter für jede Komponente erzeugen, (siehe Figur 8); (2) Anomalie-Analyse der Förderkurve. Dosierleistung über Zeit als zweite Anomalie- oder Fehlererkennung. Dadurch kann jeder einzelne Dosiervorgang einem statistischen Cluster (normal, anomal) zugeordnet werden. Das Verhalten von Fehlzuständen kann hinterlegt werden, so dass eine Klassifizierung des Fehlzustandes möglich ist. Dies ist die Grundlage für eine KI-basierte Optimierung der Dosierregelung in Kombination mit (1.2) und (1.3). (siehe Figur9)

Die Dosiervorrichtung kann durch Messen zusätzlich Rohmaterial-Parametern und/oder Anlagen-Parametern und/oder Umgebungsparametern messen und/oder erfassen. Die Rohmaterial-Parameter können mindestens Messparameter zum Erfassen von physikalischen Eigenschaften der Rohmaterialen, wie z.B. Feuchtigkeitsgehalt, Körnigkeit, Viskosität, Reinheit, chemische Zusammensetzung etc. gemessen mittels entsprechender Materialmessvorrichtungen umfassen. Die Anlagen-Parameter können z.B. mittels propriozeptiven Sensoren oder Messvorrichtungen gemessene Parameter umfassen. Das Messen der Anlagen-Parameter kann z.B. zumindest einer der folgenden Messgrössen umfassen: Stromaufnahme des Förderers oder Energieaufnahme des Motors, Drehmoment des Förderers und/oder Füllhöhe des Schüttguts im Behälter und/oder Dosierzeit und/oder Förderrohrdurchmesser und/oder Durchmesser der Förderspirale und/oder Neigungswinkel der Trichterwand und/oder Wandreibungswinkel und/oder effektiver Reibungswinkel bei den Rohmaterialsilos und/oder Friktionswärme der Schnecke und Hüllrohr bei Betrieb etc.. Die Umgebungsparameter können z.B. mittels exterozeptiven Sensoren oder Messvorrichtungen gemessene Parameter mindestens umfassend Luftfeuchtigkeit und/oder Luftdruck und/oder Umgebungstemperatur und/oder lokale Temperaturverteilungen umfassen.

Die Dosiervorrichtung detektiert erste Anomalie- und Dosierfehler der Dosiervorrichtung basierend auf den gemessenen relativen Dosierfehlern, wobei das Detektieren von Anomalie- und Dosierfehlern durch das Überschreiten der gemessenen Abweichung von einem definierten Schwellwerte pro Wägvorrichtung und geförderten Rohmaterial getriggert wird.

Die Dosiervorrichtung detektiert zweite Anomalie- und Dosierfehlern der Dosiervorrichtung, wobei mittels dynamischer Zeitnormierung die topologische Distanz zwischen den gemessenen Zeitreihen der Dosierleistungen über eine Zeit als Distanz-Matrix bestimmt wird. Die dynamischer Zeitnormierung kann z.B. basierend auf Dynamic Time Warping realisiert sein. Ein gemessenes Zeitreihensignal der Dosierleistungen kann z.B. als spektrale bzw. cepstrale Wertetupel mit anderen Wertetupel von gemessenes Zeitreihensignal der Dosierleistungen abgeglichen werden. Die Wertetupel können z.B. mit weiteren Messparametern wie einer oder mehrere der oben diskutierten Rohmaterial-Parameter und/oder Anlagen-Parameter und/oder Umgebungsparameter ergänzt werden. Mit Hilfe einer Gewichtung für die einzelnen Parameter jedes gemessenen Wertetupels wird ein Differenzmass zwischen zwei beliebigen Werten der beiden Signale aufgestellt, beispielsweise eine normalisierte euklidische Distanz oder die Mahalanobis-Distanz. Die Dosiervorrichtung sucht den günstigsten Weg vom Anfang zum Ende beider Signale über die aufgespannte Distanz-Matrix der paarweise vorliegenden Distanzen aller Punkte beider Signale. Dies kann z.B. dynamischen effizient erfolgen. Den tatsächlichen Pfad, d.h. das Warping, wird durch Backtracking nach dem ersten Durchlauf der dynamischen Zeitnormierung generiert. Für die reine Bestimmung, d.h. der entsprechenden Templateauswahl, reicht der einfache Durchlauf ohne Backtracking. Das Backtracking ermöglicht jedoch eine genaue Abbildung jedes Punktes des einen Signales auf einen oder mehrere Punkte des jeweilig anderen Signales und stellt damit die ungefähre Zeitverzerrung dar. Es ist anzufügen, dass im vorliegenden Fall, aufgrund algorithmischer Ursachen bei der Extraktion der Signalparametern der Wertetupel der optimale Pfad durch die Signaldifferenzmatrix nicht unbedingt der tatsächlichen Zeitverzerrung entsprechen.

Mittels einer statistischen Data-Mining Einheit werden dann die gemessenen und dynamisch zeitnormierten Zeitreihen basierend auf der gemessenen Distanz-Matrix in disjunkte Cluster geclustert (Clusteranalyse), wobei gemessene Zeitreihen eines ersten Clusters einen Dosierbetrieb in einem Norm-Bereich und gemessene Zeitreihen ein zweites Cluster eine Dosierbetrieb ausserhalb des Normbereichs indexieren. Durch das Clustering, d.h. der Clusteranalysen, können so Ähnlichkeitsstrukturen in den gemessenen Zeitreihen zugeordnet werden, wobei hier die so gefundenen Gruppen von ähnlichen gemessenen Zeitreihen als Cluster bezeichnet werden und die Gruppenzuordnung als Clustering. Das Clustering mittels der Dosiervorrichtung erfolgt hier mittels Data Mining, wobei durch die Verwendung des Data-Mining auch neue Clusterbereiche gefunden werden können. Die statistische Data-Mining Einheit für das Clustering der Distanzmatrix kann z.B. basierend auf dichtebasierter räumlicher Clusteranalyse mit Rauschen realisiert sein, insbesondere kann die dichtebasierte räumliche Clusteranalyse mit Rauschen basierend auf DBScan realisiert sein. DBScan als räumliche Clusteranalyse mit Rauschen arbeitet dichtebasiert und ist in der Lagen, mehrere Cluster zu erkennen. Rauschpunkte werden dabei ignoriert und separat zurückgeliefert.

Als vorverarbeitenden Schritt, d.h. Pre-Processing, kann z.B. eine Dimensionalitätsreduktion der Zeitreihen durchgeführt werden. Ganz allgemein setzten sich die oben beschriebenen Analyse-Mess-Daten aus einer grossen Anzahl verschiedener Zeitreihen z.B. mit einer Abtastrate von 500 ms zusammen. Dabei kann jede Variable z.B. in zwei Arten von Zeitreihen aufgeteilt werden: (1) Batch-Zeitreihe, wenn die Zeitreihe kann natürlicherweise in kleinere Stücke aufgeteilt werden kann, wenn eine Prozesscharge zu Ende ist (z. B. Dosierung eines Inhaltsstoffs, Mischzyklus ...); und (2) Kontinuierliche Zeitreihen: Wenn die Zeitreihe nicht auf eine offensichtliche Weise aufgeteilt werden kann und eine Verarbeitung daran vorgenommen werden muss (z. B. Gleitfenster, beliebige Aufteilung, ...). Ausserdem können Zeitreihen auch univariat oder multivariat sein: (1) Univariate Zeitreihe: Der beobachtete Prozess setzt sich nur aus einer messbaren Reihe von Beobachtungen zusammen (z. B. Gewicht einer Dosierwaage); (2) Multivariate Zeitreihen: Der beobachtete Prozess setzt sich aus zwei oder mehr messbaren Beobachtungsreihen zusammen, die korreliert sein könnten (z. B. Gewicht einer Dosierwaage und Zustand des Dosierelements (siehe Figur 11)).

Die Verwendung von Zeitreihen für die Analyse stellt eine technische Herausforderung dar, insbesondere wenn die Zeitreihen unterschiedlich lang sind (z. B. Batch-Zeitreihen). Im Rahmen des erfinderischen Systems kann es deshalb technisch vorteilhaft sein, diese Zeitreihen in ein technisch direkter verwendbares Format mittels Preprocessing vorzubearbeiten. Mithilfe des Dimensionalitätsreduktions-Verfahrens kann ein latenter Raum aus einem Satz von Zeitreihen abgeleitet werden. Dieser latente Raum kann als ein mehrdimensionaler Raum realisiert sein, der Merkmale enthält, die sinnvolle bzw. technisch relevante Eigenschaften eines hochdimensionalen Datensatzes kodieren. Technische Anwendungen dieses Konzepts finden sich in Methoden der natürlichen Sprachverarbeitung (NLP: Natural Language Processing) mit der Erstellung eines aus Textdaten abgeleiteten Worteinbettungsraums bzw. im vorliegenden Fall eines Zeitreiheneinbettungsraums (time serie embedding space), oder in der Bildverarbeitung, wo ein Convolutional Neural Network in seinen letzten Schichten höherwertige Merkmale von Bildern (Kanten, Farben ...) kodiert. Erfindungsgemäss kann dies technisch durch die Erstellung eines latenten Raums mehrerer Zeitreihen aus Replay-Daten und die Verwendung dieses latenten Raums als Grundlage für nachfolgende Aufgaben wie Anomalieerkennung (siehe Figur 12), Klassifizierung oder Regressionsaufgaben realisiert sein. Im vorliegenden Fall kann ein latenter Raum generiert werden für Zeitreihensignale mit technischen Ansätzen wie der Hauptkomponentenanalyse (principal component analysis) und dem dynamischen Time Warping und auch mit Deep-Learning-basierten, technischen Ansätzen, ähnlich denen, die für Computer-Vision- und NLP-Aufgaben verwendet werden, wie Autoencodern (siehe Figur 13) und rekurrenten neuronalen Netzen.

Betreffend der Generierung des Zeitreiheneinbettungsraums (time serie embedding space) liegt das grundlegende technische Problem, das im vorliegenden Fall die technische Modellierung und andere Lernprobleme erschwert, in der Dimensionalität. Eine Zeitserie oder Sequenz, auf der die Modellstruktur getestet werden soll, wird sich wahrscheinlich von allen Zeitserien-Sequenzen unterscheiden, die beim Training gesehen wurden. Technisch gesehen können mögliche Ansätze z.B. auf n-Grammen basieren, die eine Generalisierung durch Verkettung von sehr kurzen überlappenden Sequenzen, die im Trainingsset gesehen wurden, erhalten. Im vorliegenden Fall wird das Problem der Dimensionalität jedoch durch das Lernen einer verteilten Repräsentation für Wörter bekämpft, die es jedem Trainingssatz erlaubt, das Modell über eine exponentielle Anzahl von semantisch benachbarten Sätzen zu informieren. Das Modell lernt gleichzeitig (1) eine verteilte Repräsentation für jede Zeitserie zusammen mit (2) der Wahrscheinlichkeitsfunktion für Zeitserienfolgen, ausgedrückt in Form dieser Repräsentationen. Die Generalisierung wird dadurch erreicht, dass eine Sequenz von Zeitserien, die noch nie zuvor erkannt wurde, eine hohe Wahrscheinlichkeit erhält, wenn sie aus Zeitserien besteht, die ähnlich (im Sinne einer naheliegenden Repräsentation) zu Zeitserien sind, die einen bereits gesehenen Satz bilden. Das Training solch großer Modelle (mit Millionen von Parametern) innerhalb einer angemessenen Zeit kann selbst eine technische Herausforderung sein. Als Lösung für den vorliegenden Fall werden neuronale Netze eingesetzt, die z.B. für die Wahrscheinlichkeitsfunktion verwendet werden können. An zwei Zeitserien-Sets konnte gezeigt werden, dass der hier verwendete Ansatz signifikant bessere Ergebnisse im Vergleich zu State-of-the-Art n-Gramm-Modellen liefert, und dass der vorgeschlagene Ansatz es erlaubt, längere Zeitserien und Zeitserienkontexte zu nutzen.

Im vorliegenden Fall macht die Fähigkeit von mehrschichtigen Backpropagation-Netzen, komplexe, hochdimensionale, nichtlineare Zuordnungen aus grossen Beispielsammlungen zu lernen, diese neuronalen Netzwerke, insbesondere Convolutional Neural Networks, zu technischen Kandidaten für die Erkennungsaufgaben der Zeitreihen. Es gibt jedoch technische Probleme für die Anwendung in der vorliegenden Erfindung: In den technischen Strukturen zur Mustererkennung sammelt typischerweise ein manuell entworfener Merkmalsextraktor relevante Informationen aus der Eingabe und eliminiert irrelevante Variabilitäten. Ein trainierbarer Klassifikator kategorisiert dann die resultierenden Merkmalsvektoren (oder Zeichenketten) in Klassen. In diesem Schema können standardmässige, voll verbundene mehrschichtige Netze als Klassifikatoren verwendet werden. Ein potenziell interessanteres Schema besteht darin, den Merkmalsextraktor zu eliminieren, das Netz mit "rohen" Eingaben (z. B. normalisierten Bildern) zu füttern und sich auf Backpropagation zu verlassen, um die ersten paar Schichten in einen geeigneten Merkmalsextraktor zu verwandeln. Während dies mit einem gewöhnlichen voll verbundenen Feed-Forward-Netzwerk mit einigem Erfolg für die Aufgabe der Erkennung der Zeitserien durchgeführt werden kann, gibt es technische Probleme im vorliegenden Zusammenhang. Erstens, Zeitserien von Messparametern können sehr gross sein. Ein voll-verknüpfter erster Layer, z.B. mit einigen hundert hidden units, würde deshalb schon mehrere 10'000 Gewichte benötigen. Ein Überanpassungsproblem (Overfitting) tritt auf, wenn nicht genug Trainingsdaten vorhanden sind. Ebenfalls wachsen bei solchen Zahlen die technischen Anforderungen an das Speichermedium enorm. Das technische Hautproblem liegt jedoch darin, dass diese Netzwerke keine innewohnende Invarianz in Bezug auf lokale Verzerrungen der Input-Zeitreihen haben. D.h. das oben diskutierte Pre-prosessing mit der entsprechenden Normalisierung oder einer anderen Zeitnormalisierung muss die Zeitreihen normalisieren und zentrieren. Technisch ist kein solches Preprocessing hingegen perfekt.

Zweitens liegt ein technisches Problem von voll-verknüpften Netzwerken darin, dass die Topologie der Input-Zeitreihen vollständig ignoriert wird, Die Input-Zeitreihen können in irgendeiner Ordnung an das Netzwerk angelegt werden, ohne dass dies das Training beeinflussen würde. Im vorliegenden Fall weist jedoch der Verarbeitungsprozess eine starke lokale 2D-Struktur auf, und die Zeitserien von Messparametern haben eine starke 1D Struktur, d.h. Messparameter, welche zeitlich benachbart sind, sind hoch korreliert. Lokale Korrelationen sind der Grund, dass im Rahmen der Erfindung das Extrahieren und Kombinieren von lokalen Merkmalen der Zeitreihe vor dem Erkennen der räumlichen oder zeitlichen Objekte vorgeschlagen wird. Convolutional Neural Networks erzwingen dabei die Extraktion lokaler Merkmale, indem sie das rezeptive Feld der Hidden Units auf lokale Units beschränken. Im vorliegenden Fall wird durch die Verwendung von Convolutional Netzwerken technisch bei der Erkennung der Zeitreihen sichergestellt, dass eine Verschiebungs- und Verzehrungsinvarianz erreicht wird, namentlich durch die Anwendung von lokalen rezeptiven Felder, gemeinsamen Gewichten (oder Gewichtsreplikationen) und zeitliche Subsampling der Zeitreihen. Die Input-Ebene der Netzwerke erhält dabei Zeitreihen, die annähernd zeit-normalisiert und zentriert sind (siehe oben Time Warping).

Für das Generieren des latenten Raum für die Zeitreihen-Signale kann, wie oben beschreiben, z.B. Hauptkomponentenanalyse (principal component analysis) und dynamisches Time Warping oder auch Deep-Learning-basierte, technische Ansätze gewählt werden, wie z.B. die Verwendung von rekurrenten neuronalen Netzen. Bei der vorliegenden Erfindung ist jedoch zu beachten, dass das Lernen von Informationen über längere Zeitintervalle mittels rekurrenter Rückwärtspropagation sehr lange dauern kann, meist aufgrund eines unzureichenden, abklingenden Fehlerrückflusses. Im Rahmen der Erfindung wird deshalb die Verwendung eines neuen, effizienten und gradient-basierten Verfahrens. Dabei wird der Gradient dort abgeschnitten, wo es nicht schadet, so dass das Netzwerk lernen kann, minimale Zeitverzögerungen von mehr als 1000 diskreten Zeitschritten zu überbrücken, indem es einen konstanten Fehlerfluss durch konstante Rotationen der Fehler innerhalb einer speziellen Einheit erzwingt. Multiplikative Gate-Einheiten lernen dabei, den Zugang zum konstanten Fehlerfluss zu öffnen und zu schliessen. Durch diese erfindungsgemäss Ausführungsvariante bleibt das Netzwerk räumlich und zeitlich in Bezug auf das Lernen der Zeitreihen lokal.

In Bezug auf die Ausführungsvariante mit den Autoencodern (siehe Figur 13), wird das Netzwerk auf unüberwachte Weise trainiert (unsupervised learning), so dass das Eingangssignal zunächst in den niedrigdimensionalen latenten Raum umgewandelt und vom Decoder mit minimalem Informationsverlust rekonstruiert werden kann. Mit dem Verfahren können hochdimensionale Zeitreihen in niedrigdimensionale umgewandelt werden, indem ein multi-layer neuronales Netz mit einer kleinen zentralen Schicht trainiert wird, um die hochdimensionalen Eingangsvektoren zu rekonstruieren. Gradientenabstieg kann für die Feinabstimmung der Gewichte in solchen "Autoencoder"-Netzen verwendet werden. Dies funktioniert jedoch nur dann gut, wenn die Anfangsgewichte nahe an einer geeigneten Lösung liegen. Die hier beschriebene Ausführungsvariante stellt beim Lernen der Zeitserien eine effektive Art der Initialisierung der Gewichte bereit, die es dem Autoencodernetzwerk erlaubt, niedrigdimensionale Codes zu lernen, die besser funktionieren als die Hauptkomponentenanalyse als Werkzeug zur Reduzierung der Dimensionalität von Daten. Die erfindungsgemässe Dimensionalitätsreduktion der Zeitreihen erleichtert die Klassifizierung, Visualisierung, Kommunikation und Speicherung von hochdimensionalen Zeitreihen. Ein mögliches Verfahren ist die Hauptkomponentenanalyse (PCA), die die Richtungen der grössten Varianz in den Zeitreihen findet und jeden Datenpunkt durch seine Koordinaten entlang jeder dieser Richtungen darstellt. Als Ausführungsvariante kann z.B. eine nichtlineare Verallgemeinerung der PCA verwendet werden, indem ein adaptives, mehrschichtiges "Encoder"-Netzwerk verwendet wird, um hochdimensionale Zeitreihen in niedrigdimensionale Codes zu transformieren, und ein ähnliches Decoder-Netzwerk, um die Zeitreihen aus den Codes wiederherzustellen. Bei der Ausführungsvariante können ausgehend von zufälligen Gewichten in den beiden Netzwerken diese gemeinsam trainiert werden, indem die Diskrepanz zwischen den Original-Zeitriehen und ihrer Rekonstruktion minimiert wird. Die erforderlichen Gradienten erhält das System, indem es eine Kettenregel anwendet, um die Fehlerableitungen zunächst durch das Decoder-Netzwerk und dann durch das Encoder-Netzwerk zurückzupropagieren. Dieses System wird als hier als Autoencoder bezeichnet.

Das oben-diskutierte nicht überwachte maschinelle Lernverfahren für die dynamische, auf Time Warping basierende (DTW) Zeitreihen-Erkennung, kann auch überwacht erfolgen. Zwei Ausführungsvarianten von Lernstrategien, überwacht und unbeaufsichtigt, können erfindungsgemäss mit dem DTW für die Zeitriehen angewandt werden. Als Ausführungsvariante kann z.B. zwischen zwei überwachte Lernverfahren, inkrementelles Lernen und Lernen mit Prioritätsverweigerung unterschieden werden. Das inkrementelle Lernverfahren ist konzeptionell einfach, benötigt typischerweise jedoch ein grosses Set von Zeitreihen für den Abgleich. Mit dem Lernverfahren mit Prioritätsverweigerung kann die Anpassungszeit effektiv reduziert werden, wobei die Erkennungsgenauigkeit typischerweise leicht abnimmt. Für die Ausführungsvariante des unüberwachten Lernens kann, neben der oben diskutierten Variante, z.B. auch ein automatischer Lernansatz verwendet werden basierend auf most-matching learning und auf dem Lernen mit Priorität und Ablehnung basiert. Das hier offenbarte most-matching learning kann verwendet werden, um auf intelligente Weise die geeigneten Zeitreihen für das Systemlernen auszuwählen. Die Effektivität und Effizienz aller drei gerade vorgeschlagenen maschinellen Lernansätze für DTW können anhand von entsprechenden Test zur Zeitreihen-Erkennung demonstriert werden.

Im Falle eines Detektieren von ersten und/oder zweiten Anomalie- und Dosierfehlern der Dosiervorrichtung, werden die gemessenen Dosiergeschwindigkeiten in Abhängigkeit der Zeit als Eingangsdatenpattern an eine maschinen-lernende Einheit übertragen und die Dosierungsparameter der Dosiervorrichtung werden mittels der elektronischen Anlagesteuerung basierend auf den Ausgangswerten der maschinen-lernende Einheit angepasst, wobei die maschinen-lernende Einheit die Eingangspattern anhand gelernter Muster klassifiziert und entsprechende Dosierungsparameter generiert. Durch zusätzlichem Messen von Rohmaterial-Parametern umfassend Messparameter zum Erfassen von physikalischen Eigenschaften der Rohmaterialen mittels Materialmessvorrichtungen, und/oder von Anlagen-Parametern mittels propriozeptiven Sensoren oder Messvorrichtungen, und/oder von Umgebungsparametern mittels exterozeptiven Sensoren oder Messvorrichtungen mindestens umfassend Luftfeuchtigkeit und/oder Luftdruck und/oder Umgebungstemperatur und/oder lokale Temperaturverteilungen, können z.B. neben den gemessenen zeitreihen von Dosiergeschwindigkeiten zusätzlich ein oder mehrere der Rohmaterial-Parametern und/oder der Anlagen-Parametern und/oder der Umgebungsparametern in Abhängigkeit der Zeit an die maschinen-lernende Einheit als Eingangsdatenpattern übertragen werden. Die maschinen-lernende Einheit kann z.B. basierend auf statischen oder adaptiven Fuzzy-Logic Systemen und/oder überwachtes oder unüberwachtes neuronalen Netzwerken und/oder fuzzy-neuronalen Netzwerken und/oder genetisch-algorithmus-gestützten Systemen realisiert sein. Die maschinen-lernende Einheit kann z.B. Naive Bayes-Klassifikatoren als maschinen-lernende Struktur umfasst. Die maschinen-lernende Einheit kann z.B. basierend auf überwachten Lernstrukturen umfassend Logistische Regression und/oder Desicion Trees und/oder Support Vector Machine(SVM) und/oder lineare Regression als maschinen-lernende Struktur realisiert sein. Die maschinen-lernende Einheit kann z.B. basierend auf unüberwachten Lernstrukturen umfassend K-means clustering oder K-nearest neighbor und/oder Dimensionalitätsreduktion und/oder Association Rule Learning realisiert sein. Die maschinen-lernende Einheit kann z.B. basierend auf Reinforcement Learning Strukturen umfassend Q-Learning realisiert sein. Die maschinen-lernende Einheit kann z.B. basierend auf Ensemble Learning umfassend Bagging (Bootstrap Aggregating) und/oder Boosting und/oder Random Forest und/oder Stacking realisiert sein. Schliesslich kann die maschinen-lernende Einheit basierend auf neuronalen Netzwerkstrukturen umfassend Feedforward Netzwerke und/oder Hopfield Netzwerke und/oder Convolutional Neuronale Netzwerke oder Deep Convolutional Neuronale Netzwerke realisiert sein.

Wie oben diskutiert, sollte im Idealfall die Förderkurve (d.h. geförderte Menge über Zeit) jeder einzelnen Komponente einer Rezeptur immer gleich sein. Allerdings ergeben sich durch verschiedene Einflüsse (Art des Rohmaterials, Feuchtigkeit, lokale Temperaturverteilung, Verklumpung, natürliche Schwankungen des Rohmaterials, Geometrie des Silos) Abweichungen von den erwarteten Fliesseigenschaften des Schüttgutes. Dies kann zu Inkonsistenzen in der Fördergeschwindigkeit, der Fördermenge, und damit der Dosiergenauigkeit führen. Eine Verbesserung der Dosiergenauigkeit kann auch erreicht werden durch Auswahl des am besten geeigneten Silos für ein bestimmtes Rohmaterial und eine regelmässige Anpassung der Dosierparameter für jedes Rohmaterial. Im Stand der Technik geschah dies basierend auf Expertenerfahrung, ohne detaillierte Analyse historischer Daten. Z.B. durch das Generieren einer "Heatmap" (vgl. Figur 7) umfassend Dosiergenauigkeit (je dunkler desto schlechter) über Silo-Nr. (vertikale Achse) und Zutat / Komponente (horizontale Achse) kann auch z.B. mittels der maschinen-lernenden Einheit als Expertensystem Aussagen generiert werden, welche Produkt-Silo-Kombination beste Dosiergenauigkeiten liefert (vgl. Figur 7).

Das Aufzeichnen der Analyse-Mess-Daten erlaubt das Realisieren der erfindungsgemässen Replay-Funktion (deshalb die Benennung der Analyse-Mess-Daten auch als Replay-Daten; vergl. oben). Die Replay-Funktion ist als eine spezifische Ausgestaltung der erfindungsgemässen Vorrichtung gedacht. Sie kann mit und ohne die Optimierungsfunktion von Anspruch 1 realisiert sein, d.h. mit und ohne das Anpassen der Dosierungsanlageparameter 1111 der Dosiervorrichtung 1 mittels der elektronischen Anlagesteuerung 11 basierend auf den Ausgangswerten 182 der maschinen-lernende Einheit 18. Grundsätzlich kann das Aufzeichnen der Analyse-Mess-Daten getriggert sein durch das Detektieren einer ersten und/oder zweiten Anomalie bzw. ersten und zweiten Anomalie- und Dosierfehlern 11121/11122 der Dosiervorrichtung 1. Figur 15 zeigt eine solche Replay-Ausführungsvariante mit Bereitstellung von Analyse-Messdaten (als Replay-Daten) zum Überwachen eines Zeitabschnitts im Replay-Modus der Dosiervorrichtung 1. Die Analyse-Messdaten werden z.B. auf eines Speichermediums eines Servers (S) aufgezeichnet. Mittels einer Baugruppe (BG), die einen Client zum zeitverschobenen Abrufen von Analyse-Messdaten umfasst, wird z.B. mittels Zeit-Tag (zeit-basierte Kennzeichnung) oder eines vom System dem Benutzer zur Auswahl angezeigten Anomaliebereichs ein zeitlich zur Echtzeit verschobenen Abschnitt der Replay-Daten ausgewählt und z.B. mittels Request von Server S angefordert. Dieser stellt den angeforderten Zeitabschnitt der Replaydaten in Form von Multimedia-Datenpaketen zusammen und übermittelt sie über das Netzwerk an den Client der Baugruppe. Der Client entpackt die Multimedia-Datenpakete und stellt sie für den Benutzer auf dem Monitor (M) dar. Die Baugruppe mit dem Client kann Teil des Server S sein, z.B. als Teil der Anlagesteuerung 11 realisiert sein, oder als Netzwerk-Baugruppe, welche über das Netzwerk N auf den Server S oder die Anlagesteuerung 11 mit integriertem Server S zugreifen kann. Figur 16 zeigt ein Zeit-Datenmengen-Diagramm mit der Hervorhebung eines zum Abruf verfügbaren Zeitbereichs z.B. beinhaltend eine von der Vorrichtung detektierte Anomalie. Der gesamte Real Time Analyse-Datenstream kann aufgezeichnet werden oder nur Zeitbereiche des Analyse-Datenstream, d.h. der Replay-Daten, in welchen erste und/oder zweite Anomalie- und/oder Dosierfehlern 11121/11122 mittels der Dosiervorrichtung 1 detektiert wurden. Wie mit dem Zeit-Datenmengen-Diagramm mit der Hervorhebung einer Wiedergabe eines in der Vergangenheit liegenden Anomalie-Bereichs der Figur 17 gezeigt, kann die erfindungsgemässe Ausführungsform auch so realisiert sein, dass der Benutzer an einen beliebigen, in der Vergangenheit liegenden Zeitpunkt des aufgezeichneten Analyse-Datenstream springen kann, also unabhängig von Anomalie-Detektionen. Auch kann der Benutzer z.B. über einen bestimmten Zeitbereich hinaus zeitverzögert sich die Analyse-Messdaten vom abgespeicherten Replay-Datenstream abrufen, an einem Zeitpunkt x einen Zeitbereich nach vorne (forward) oder nach hinten (rewind) im aufgezeichneten Datenstream springen. Das Zeit-Datenmengen-Diagramm von Figur 18 illustriert schliesslich beispielshaft eine Ausführungsform, bei welcher dem Benutzer z.B. über den Client auf der Baugruppe die detektierten Anomalie-Zeitbereiche zur Selektion angezeigt werden. Insbesondere kann eine weitere Ausführungsvariante so realisiert sein, dass die angeschlossene Vorrichtung, d.h. die Dosiervorrichtung 1, durch die elektronischen Anlagesteuerung 11 wieder genau in den Betriebsmodus mit den gleichen Betriebsparameter gesetzt werden kann, wie im detektierten Anomalie-Bereich. Die Dosiervorrichtung 1 kann so in real-time noch einmal durch den Anomalie-Bereich laufen gelassen werden, z.B. zu Test-, Optimierungs- oder anderen Überprüfungszwecken.

Wie oben bereits diskutiert, kann z.B. der ganze real-time Analyse-Datenstream in digitalem Format auf dem Server S aufgezeichnet werden oder nur die Bereiche mit detektierten, ersten und/oder zweiten Anomalien A bis H. Der Server kann z.B. auch zentral von einem Provider für die Bereitstellung dieser in der Vergangenheit liegenden Replay-Daten bereitgestellt werden, wobei z.B. ein Betreiber der Dosiervorrichtung mittels einer gesicherten Baugruppe/Computer mit entsprechendem Client auf den Server S zugreifen kann. Die Aufzeichnung erfolgt dabei so, dass ein Anomaliebereich A bis H entweder als eine einzelne Datei oder in mehrere jeweils einen Anomalie-Teilbereich repräsentierende Dateien abgespeichert werden. Die Anzahl der Aufzeichnungen der Replay-Datenbereiche und der daraus entstehenden Files kann dabei je nach Anzahl der Benutzer, welche anschliessend darauf Zugriff haben sollen, verschieden sein. Ungeachtet dessen kann die Anzahl der Aufzeichnungen des real-time Analyse-Datenstreams (Replay-Datenstreams) von der verwendeten Aufzeichnungs- und Datenbereitstellungs-Technologie abhängig sein. Diese Dateien können z.B. nach ihrer Aufzeichnung auch mittels einer Digital-Subscriber-Line oder anderen eindeutig zuordenbaren Datenübertragung von der Baugruppe BG oder einem anderen dafür vorgesehenen Empfänger mit eindeutiger Adresse abgerufen und an einem Multimediagerät MG, wie z.B. einem Monitor oder Computer, abgespielt werden. Die Baugruppe BG kann beispielsweise bei einem mobilen Multimediagerät, wie einem Mobiltelefon, einem PDA, einem Tablett-PC, auch in das entsprechende Gerät integriert sein. Unmittelbar nach der Echtzeit Aufzeichnung des Replay-Datenstreams sind die aufgezeichneten Bereiche der jeweiligen, detektierten Anomalien bzw. der jeweiligen Zeitbereiche oder gesetzten Zeit-Tags für den Benutzer abrufbar. Bei Figur 16 ist zum Zeitpunkt tc dieser Anomalie-Bereich vollständig auf dem Server S zu dessen Abruf aufgezeichnet und bereitgestellt. Teile dieses Anomaliebereichs können bereits auch unmittelbar nach dem Beginn ihrer Aufzeichnung und/oder Detektion abrufbar sein, sofern sie in der Vergangenheit liegen. Der diesen Anomalie-Bereich auswählende Benutzer erhält diesen Anomalie-Bereich C in digitalem Format in Echtzeit über den Client der Baugruppe auf dem Monitor MG dargestellt. Wie Figur 17 zeigt, kann auch ein Pausieren, Rewind oder Forwarding (falls auf ein in der Vergangenheit liegender Teil des Replay-Datenstreams zugegriffen wurde) zum Monitoring des Replay-Datenstream mittels des Clients möglich sein. Alle folgenden Zeitbereiche des Replay-Datenstreams laufen für den Benutzer dann z.B. beim Pausieren um die Länge der Pause, zeitverschoben zum Real Time Replay-Datenstream ab. Ein Springen zurück in den Real Time Modus der Überwachung des Analyse-Messdatenstreams ist natürlich für den Benutzer jederzeit möglich. Dabei werden Teile des Replay-Datenstreams entsprechend wieder übersprungen. Für bereits detektierte Anomalie-Bereiche des Replay-Datenstreams besteht grundsätzlich auch die Möglichkeit, den gewünschte Anomalie-Bereich A-H als File downzuloaden und dann anzusehen. Die Downloadzeit kann dabei jedoch in Abhängigkeit von der verfügbare Bandbreite für die Datenübertragung sehr zeitintensiv sein. Darüber hinaus kann die Downloadzeit signifikant verlängert werden, wenn gleichzeitig noch weitere Anomalie-Bereich oder den real-time Stream angeschaut/überwacht werden. Allgemein kann die Replay-Ausführungsvariante z.B. so ausgestaltet sein, dass die ein neues Verfahren zur Bereitstellung von Replay-Daten über eine einem Multimedia-Gerät MG zugeordnete Baugruppe BG mit entsprechendem Client. Auf dem Server S wird der gesamte Replay-Datenstream aufgezeichnet. Als Ausführungsvariante können auch nur die detektierten ersten und/oder zweiten Anomalie-Bereiche abgespeichert werden. Dann erfolgen die Schritte: a) Auswählen mittels dem von der Baugruppe (BG) unterstützten Client einer oder mehrerer Anomalie-Bereiche und/oder Zeitbereiche und/oder auswählbare Zeit-Tags oder Zeit-Markers im gespeicherten Replay-Datenstream am Multimedia-Gerät (MG); b) Abrufen, aufgrund der vorherigen Auswahl, eines oder mehrerer Zeitbereiche aufgrund ihrer eindeutigen Kennzeichnung (zeitlich oder inhaltlich (z.B. detektierte Anomalien oder mittels einem Filter durch eingegebene Charakteristikparametergefilterte Replay-Datenbereiche)). Bei der Übertragung könne auch mehrere Multimedia-Datenfiles jeweils einen Anomalie-/Zeitbereichs repräsentieren und deren Kennzeichnungen dabei jeweils eine eindeutig teilbereich-spezifische Kennzeichnung umfasst zum Abruf vom Server (S) auf dem jeweils die Zeit-/Anomaliebereiche (A bis H) abgespeichert ist; c) Bereitstellen eines in den Datenfiles gespeicherten Zeitbereichs des aufgezeichneten Replay-Datenstreams am Multimedia-Gerät (MG) beginnend mit dem ausgewählten Bereich oder Teilbereich mit einer Zeitverzögerung, die mindestens so gross ist, wie die Differenz zwischen des tatsächlichen real-time Analyse-Datenstreams und dem Auswählzeitpunkt (siehe Figuren 16-18).

### Bezugszeichen

- 1: Dosiervorrichtung
11 Anlagesteuerung
111 Elektronische Steuereinheiten
1111 Dosieranlageparameter
1112 Relativer Dosierfehler
11121 Erste Anomalie- und Dosierfehler
11122 Zweite Anomalie- und Dosierfehler
1113 Dosierleistung
1114 Dosiergeschwindigkeit
12 Rohmaterialsilos
13 Fördervorrichtung
131 Fördermenge
132 Antriebsmotor
133 Förderschnecke
14 Wägvorrichtungen
15 Auffangbehälter für das Mischgut
151 Mischer
16 Dynamische Zeitnormierungseinheit
161 Topologische Distanz zwischen den gemessenen Zeitreihen
162 Distanz-Matrix
17 Statistische Data-Mining Einheit
171 Erste Cluster (Norm-Bereich)
172 Zweite Cluster (Abnorm-Bereich)
173 DBScan
18 Maschinen-lernende Einheit
181 Eingangsdatenpattern
182 Ausgangswerte
19 Messvorrichtungen
191 Materialmessvorrichtungen
192 Propriozeptiven Sensoren oder Messvorrichtungen
193 Exterozeptiven Sensoren oder Messvorrichtungen
- 2: Dosiermaterial
21 Rohmaterial
211 Schüttgut
212 Viskoses Gut
22 Mischgut

## Patentansprüche

1. Verfahren für eine elektronische Anlagesteuerung (11) für Dosiervorrichtungen (1) mit optimiertem Dosieren von Rohmaterialien (21), umfassend Schüttgut (211) oder anderes Gut, zu Mischgut (22) mittels einer Dosiervorrichtung (1), wobei die Dosiervorrichtung (1) Rohmaterialsilos (12), Fördervorrichtungen (13), Wägvorrichtungen (14) sowie einen Mischer (151) und/oder Auffangbehälter für das Mischgut (22) umfasst, wobei das Rohmaterial (21) über die Fördervorrichtungen (13) zum Mischer (151) und/oder Auffangbehälter (15) für das Mischgut (22) transportiert wird, wobei mittels der Wägvorrichtungen (14) die mittels der Fördervorrichtungen (13) geförderte Menge Rohmaterial gemessen wird und wobei eine oder mehrere mit den Wägvorrichtungen (14) verbundenen elektronischen Steuereinheiten (111) die Fördermenge (131) der Fördervorrichtungen (13) basierend auf Dosieranlageparametern (1111) regeln, **gekennzeichnet durch**:
Messen relativer Dosierfehler (1112) gegeben durch die gemessene Abweichung eines Mittelwertes über eine Zeiteinheit des Gewichts des geförderten Rohmaterials (21) pro Wägvorrichtung (14) von einem Zielgewichtswert, Messen von zugeordneten Häufigkeitsverteilungen der skalierten relativen Dosierfehler (1112) pro Wägvorrichtung (14) und gefördertem Rohmaterial (21), Messen von Dosierleistungen (1113) über die Zeit pro Fördervorrichtung (13) und gefördertem Rohmaterial (21) als Zeitreihe von Messwerten von Dosierleistungen (1113), und Messen von Dosiergeschwindigkeiten (1114) in Abhängigkeit derZeit pro Fördervorrichtung (13) und gefördertem Rohmaterial (21),
Detektieren von ersten Anomalie- und Dosierfehlern (11121) der Dosiervorrichtung (1) basierend auf den gemessenen relativen Dosierfehlern (1112), wobei das Detektieren von Anomalie- und Dosierfehlern (11121) durch das Überschreiten der gemessenen Abweichung von einem definierten Schwellwert pro Wägvorrichtung (14) und gefördertem Rohmaterial (21) getriggert wird,
Detektieren von zweiten Anomalie- und Dosierfehlern (11122) der Dosiervorrichtung (1), wobei mittels dynamischer Zeitnormierung (16) die topologische Distanz (161) zwischen den gemessenen Zeitreihen der Dosierleistungen (1113) über eine Zeit als Distanz-Matrix (162) bestimmt wird und mittels einer statistischen Data-Mining Einheit (17) die gemessenen Zeitreihen basierend auf der gemessenen Distanz-Matrix (162) in disjunkte Cluster geclustert werden, und wobei gemessene Zeitreihen eines ersten Clusters (171) einen Dosierbetrieb in einem Norm-Bereich und gemessene Zeitreihen ein zweites Cluster (172) einen Dosierbetrieb ausserhalb des Normbereichs indexieren, und
im Falle des Detektierens von ersten und/oder zweiten Anomalie- und Dosierfehlern (11121/11122) der Dosiervorrichtung (1), Übertragen der gemessenen Dosiergeschwindigkeiten (1114) in Abhängigkeit derZeit als Eingangsdatenpattern (181) an eine maschinen-lernende Einheit (18) und Anpassen der Dosierungsanlageparameter (1111) der Dosiervorrichtung (1) mittels der elektronischen Anlagesteuerung (11) basierend auf den Ausgangswerten (182) der maschinen-lernenden Einheit (18), wobei die maschinen-lernende Einheit (18) die Eingangspattern (181) anhand gelernter Muster klassifiziert und entsprechende Dosierungsparameter (1111) generiert.

2. Verfahren nach Anspruch 1, **dadurch gekennzeichnet, dass** ein Motor (132) mit Getriebe zum Antrieb der jeweiligen Fördervorrichtung (13) dient, wobei mittels der Dosieranlageparameter (1111) der Motor (131) mittels der Steuereinheit (111) geregelt und so der gewünschte Massestrom eingestellt wird.

3. Verfahren nach Anspruch 2, **dadurch gekennzeichnet, dass** mindestens eine der Fördervorrichtungen (13) als Förderschnecke (133) ausgebildet ist, wobei über die Regelung der Drehzahl der Förderschnecke (133) der gewünschte Massenstrom eingestellt wird.

4. Verfahren nach einem der Ansprüche 1 bis 3, **dadurch gekennzeichnet, dass** mittels der Wägvorrichtungen (14) das Gewicht des geförderten Rohmaterials (21) kontinuierlich gemessen wird.

5. Verfahren nach einem der Ansprüche 1 bis 4, **dadurch gekennzeichnet, dass** der relative Dosierfehler (1112) basierend auf der gemessenen Standardabweichung des gemessenen Mittelwerts pro Zeiteinheit des Gewichts in Gewichts-% des Zielgewichts getriggert wird.

6. Verfahren nach einem der Ansprüche 1 bis 5, **dadurch gekennzeichnet,**
**dass** die dynamische Zeitnormierung (16) basierend auf Dynamic Time Warping realisiert ist.

7. Verfahren nach einem der Ansprüche 1 bis 6, **dadurch gekennzeichnet,**
**dass** die statistische Data-Mining Einheit (17) für das Clustering der Distanzmatrix (162) basierend auf dichtebasierter räumlicher Clusteranalyse mit Rauschen realisiert ist.

8. Verfahren nach Anspruch 7, **dadurch gekennzeichnet, dass** die dichtebasierte räumliche Clusteranalyse mit Rauschen basierend auf DBScan (173) realisiert ist.

9. Verfahren nach einem der Ansprüche 1 bis 8, **dadurch gekennzeichnet, dass** die Zeiteinheit zum Messen relativer Dosierfehler (1112) gegeben ist durch die gemessene Abweichung des täglichen Mittelwert des Gewichts des geförderten Rohmaterials pro Wägvorrichtung (14) von einem Zielgewichtswert.

10. Verfahren nach einem der Ansprüche 1 bis 9, **gekennzeichnet durch** zusätzliches Messen von Rohmaterial-Parametern umfassend Messparameter zum Erfassen von physikalischen Eigenschaften der Rohmaterialen mittels Materialmessvorrichtungen (191), und/oder von Anlagen-Parametern mittels propriozeptiven Sensoren oder Messvorrichtungen (192), und/oder von Umgebungsparametern mittels exterozeptiven Sensoren oder Messvorrichtungen (193) mindestens umfassend Luftfeuchtigkeit und/oder Luftdruck und/oder Umgebungstemperatur und/oder lokale Temperaturverteilungen, wobei neben der gemessenen Dosiergeschwindigkeiten zusätzlich ein oder mehrere der Rohmaterial-Parameter und/oder der Anlagen-Parameter und/oder der Umgebungsparameter in Abhängigkeit der Zeit an die maschinen-lernende Einheit als Eingangsdatenpattern übertragen werden.

11. Verfahren nach Anspruch 10, **dadurch gekennzeichnet, dass** das Messen der Anlagen-Parameter zumindest einer der folgenden Messgrössen umfasst: Stromaufnahme des Förderers oder Energieaufnahme des Motors, Drehmoment des Förderers und/oder Füllhöhe des Schüttguts im Behälter und/oder Dosierzeit und/oder Förderrohrdurchmesser und/oder Durchmesser der Förderspirale und/oder Neigungswinkel der Trichterwand und/oder Wandreibungswinkel und/oder effektiver Reibungswinkel bei den Rohmaterialsilos.

12. Verfahren nach einem der Ansprüche 1 bis 11, **dadurch gekennzeichnet, dass** die maschinen-lernende Einheit (18) basierend auf statischen oder adaptiven Fuzzylogic Systemen und/oder überwachten oder unüberwachten neuronalen Netzwerken und/oder fuzzy-neuronalen Netzwerken und/oder genetisch-algorithmus-gestützten Systemen realisiert ist.

13. Verfahren nach einem der Ansprüche 1 bis 12, **dadurch gekennzeichnet, dass** die maschinen-lernende Einheit (18) Naive Bayes-Klassifikatoren als maschinen-lernende Struktur umfasst.

14. Verfahren nach einem der Ansprüche 1 bis 13, **dadurch gekennzeichnet, dass** die maschinen-lernende Einheit (18) basierend auf überwachten Lernstrukturen umfassend Logistische Regression und/oder Desicion Trees und/oder Support Vector Machine(SVM) und/oder lineare Regression als maschinen-lernende Struktur realisiert ist.

15. Verfahren nach einem der Ansprüche 1 bis 13, **dadurch gekennzeichnet, dass** die maschinen-lernende Einheit (18) basierend auf unüberwachten Lernstrukturen umfassend K-means clustering oder K-nearest neighbor und/oder Dimensionalitätsreduktion und/oder Association Rule Learning realisiert ist.

16. Verfahren nach einem der Ansprüche 1 bis 13, **dadurch gekennzeichnet, dass** die maschinen-lernende Einheit (18) basierend auf Reinforcement Learning Strukturen umfassend Q-Learning realisiert ist.

17. Verfahren nach einem der Ansprüche 1 bis 13, **dadurch gekennzeichnet, dass** die maschinen-lernende Einheit (18) basierend auf Ensemble Learning umfassend Bagging (Bootstrap Aggregating) und/oder Boosting und/oder Random Forest und/oder Stacking realisiert ist.

18. Verfahren nach einem der Ansprüche 1 bis 13, **dadurch gekennzeichnet, dass** die maschinen-lernende Einheit (18) basierend auf Neuronalen Netzwerkstrukturen umfassend Feedforward Netzwerken und/oder Hopfield Netzwerken und/oder Convolutional Neuronalen Netzwerken oder Deep Convolutional Neuronalen Netzwerken realisiert ist.

19. Verfahren nach einem der Ansprüche 1 bis 18, **dadurch gekennzeichnet, dass** im Falle des Detektierens von ersten und/oder zweiten Anomalie- und Dosierfehlern (11121/11122) der Dosiervorrichtung (1), die maschinen-lernende Einheit (18) die Eingangspattern (181) anhand gelernter Muster klassifiziert und entsprechende Expertensystemanweisungen generiert.

20. Verfahren nach Anspruch 19, **dadurch gekennzeichnet, dass** die Expertensystemanweisungen mindestens eine Anweisung betreffend der zu optimierender Wahl von Rohmaterialsilos (12) für bestimmte Silogüter und/oder Reinigungs-/Wartungsanweisungen und/oder Schädlings-/Pilzbefallwarnmeldungen generiert.

21. Verfahren nach einem der Ansprüche 1 bis 20, **dadurch gekennzeichnet, dass** im Falle des Detektierens von ersten und/oder zweiten Anomalie- und Dosierfehlern (11121/11122) der Dosiervorrichtung (1), die maschinen-lernende Einheit (18) die Eingangspattern (181) anhand gelernter Muster klassifiziert und Informationssignale an ein zentrales System generiert, wobei das zentrale System geographische und/oder topographische und/oder zeitliche Korrelationen trackt und entsprechende Warn-/Alarmmeldungen generiert.

## Claims

1. Method for an electronic system controller (11) for dosing devices (1) with optimised dosing of raw materials (21), comprising bulk material (211) or other material, to form mixed material (22) by means of a dosing device (1), wherein the dosing device (1) comprises raw material silos (12), conveying devices (13), weighing devices (14) and a mixer (151) and/or collecting container for the mixed material (22), wherein the raw material (21) is transported to the mixer (151) and/or collecting container (15) for the mixed material (22) via the conveying devices (13), wherein the amount of raw material conveyed by means of the conveying devices (13) is measured by means of the weighing devices (14), and wherein one or more electronic control units (111) connected to the weighing devices (14) regulate the conveying quantity (131) of the conveying devices (13) based on dosing system parameters (1111), **characterised by**:
measuring relative dosing errors (1112) given by the measured deviation of an average across one time unit of the weight of the conveyed raw material (21) per weighing device (14) from a target weight value, measuring allocated frequency distributions of the scaled relative dosing errors (1112) per weighing device (14) and conveyed raw material (21), measuring dosing capabilities (1113) overtime per conveying device (13) and conveyed raw material (21) as a time series of measurements of dosing capabilities (1113), and measuring dosing speeds (1114) depending on the time per conveying device (13) and conveyed raw material (21),
detecting first anomaly and dosing errors (11121) of the dosing device (1) based on the measured relative dosing errors (1112), wherein the detection of anomaly and dosing errors (11121) is triggered by exceeding the measured deviation of a defined threshold value per weighing device (14) and conveyed raw material (21),
detecting second anomaly and dosing errors (11122) of the dosing device (1), wherein the topological distance (161) between the measured times series of the dosing capabilities (1113) over a period of time is determined as a distance matric (162) by means of dynamic temporal standardisation (16), and the measured time series are clustered into disjoint clusters based on the measured distance matrix (162) by means of a statistical data mining unit (17), and wherein measured time series of a first cluster (171) index a dosing operation in a standard range and measured time series of a second cluster (172) index a dosing operation outside the standard range, and
if first and/or second anomaly and dosing errors (11121/11122) of the dosing device (1) are detected, transmitting the measured dosing speeds (1114) depending on the time as input data patterns (181) to a machine-learning unit (18) and adapting the dosing system parameters (1111) of the dosing device (1) by means of the electronic system controller (11) based on the starting values (182) of the machine-learning unit (18), wherein the machine-learning unit (18) classifies the input patterns (181) by means of learnt patterns and generates corresponding dosing parameters (1111).

2. Method according to claim 1, **characterised in that** an engine (132) with a transmission serves to drive the respective conveying device (13), wherein, by means of the dosing system parameters (1111), the engine (131) is regulated by means of the control unit (111) and thus the desired mass flow is set.

3. Method according to claim 2, **characterised in that** at least one of the conveying devices (13) is formed as a conveying screw (133), wherein the desired mass flow is set by regulating the rotational speed of the conveying screw (133).

4. Method according to one of claims 1 to 3, **characterised in that** the weight of the conveyed raw material (21) is continuously measured by means of the weighing devices (14).

5. Method according to one of claims 1 to 4, **characterised in that** the relative dosing error (1112) is triggered based on the measured standard deviation of the measured average per time unit of the weight in weight-% of the target weight.

6. Method according to one of claims 1 to 5, **characterised in that** the dynamic temporal standardisation (16) is implemented based on Dynamic Time Warping.

7. Method according to one of claims 1 to 6, **characterised in that** the statistical data mining unit (17) for clustering the distance matrix (162) is implemented based on density-based spatial cluster analysis with static.

8. Method according to claim 7, **characterised in that** the density-based spatial cluster analysis with static is implemented based on DB scan (173).

9. Method according to one of claims 1 to 8, **characterised in that** the time unit for measuring relative dosing errors (1112) is determined by the measured deviation of the daily average of the weight of the conveyed raw material per weighing device (14) from a target weight value.

10. Method according to one of claims 1 to 9, **characterised by** additionally measuring raw material parameters comprising measuring parameters for recording physical properties of the raw materials by means of material measuring devices (191), and/or system parameters by means of proprioceptive sensors or measuring devices (192), and/or surroundings parameters by means of exteroceptive sensors or measuring devices (193) at least comprising atmospheric humidity and/or air pressure and/or surroundings temperature and/or local temperature distributions, wherein, along with the measured dosing speeds, one or more of the raw material parameters and/or the system parameters and/or the surroundings parameters are additionally transferred to the machine-learning unit as input data patterns depending on the time.

11. Method according to claim 10, **characterised in that** measuring the system parameters comprises at least one of the following measured variables: current consumption of the conveyor or energy consumption of the engine, rotational moment of the conveyors and/or fullness level of the bulk material in the container and/or dosing time and/or conveyor pipe diameter and/or diameter of the conveyor spiral and/or angle of inclination of the funnel wall and/or angle of wall frictions and/or effective angle of friction with the raw material silos.

12. Method according to one of claims 1 to 11, **characterised in that** the machine-learning unit (18) is implemented based on statistical or adaptive fuzzy logic systems and/or monitored or unmonitored neuronal networks and/or fuzzy-neuronal networks and/or systems supported by genetic algorithms.

13. Method according to one of claims 1 to 12, **characterised in that** the machine-learning unit (18) comprises naive Bayes classifiers as the machine-learning structure.

14. Method according to one of claims 1 to 13, **characterised in that** the machine-learning unit (18) is implemented based on monitored learning structures comprising logistical regression and/or decision trees and/or a support vector machine (SVM) and/or linear regression as the machine-learning structure.

15. Method according to one of claims 1 to 13, **characterised in that** the machine-learning unit (18) is implemented based on unmonitored learning structures comprising K-means clustering or K-nearest neighbour and/or dimensionality reduction and/or Association Rule Learning.

16. Method according to one of claims 1 to 13, **characterised in that** the machine-learning unit (18) is implemented based on reinforcement learning structures comprising Q-learning.

17. Method according to one of claims 1 to 13, **characterised in that** the machine-learning unit (18) is implemented based on ensemble learning comprising bagging (bootstrap aggregating) and/or boosting and/or random forest and/or stacking.

18. Method according to one of claims 1 to 13, **characterised in that** the machine-learning unit (18) is implemented based on neuronal network structures comprising feedforward networks and/or Hopfield networks and/or convolutional neuronal networks or deep convolutional neuronal networks.

19. Method according to one of claims 1 to 18, **characterised in that**, in the event of detecting first and/or second anomaly and dosing errors (11121/11122) of the dosing device (1), the machine-learning unit (18) classifies the input patterns (181) by means of learned patterns and generates corresponding expert system instructions.

20. Method according to claim 19, **characterised in that** the expert system instructions generates at least one instruction relating to the choice to be optimised of raw material silos (12) for certain silo goods and/or cleaning/maintenance instructions and/or damage/fungal infestation warnings.

21. Method according to one of claims 1 to 20, **characterised in that**, in the event of detecting first and/or second anomaly and dosing errors (11121/11122) of the dosing device (1), the machine-learning unit (18) classifies the input pattern (181) by means of learnt patterns and generates information signals to a central system, wherein the central system tracks geographical and/or topographical and/or temporal correlations and generates corresponding warnings/alarms.

## Revendications

1. Procédé destiné à une commande électronique d'installation (11) destinée à des dispositifs de dosage (1) offrant un dosage optimisé de matières premières (21), comprenant des matières en vrac (211) ou autres, en des matières de mélange (22) au moyen d'un dispositif de dosage (1), ledit dispositif de dosage (1) comprenant des silos de matières premières (12), des dispositifs de convoyage (13), des dispositifs de pesée (14) ainsi qu'un mélangeur (151) et/ou récipient de collecte pour matières de mélange (22), ladite matière première (21) étant transportée par les dispositifs de convoyage (13) jusqu'au mélangeur (151) et/ou récipient de collecte (15) pour matières de mélange (22), la quantité de matière première transportée au moyen des dispositifs de convoyage (13) étant mesurée au moyen des dispositifs de pesée (14), et une ou plusieurs unités de commande électroniques (111) reliées aux dispositifs de pesée (14) régulant la quantité d'apport (131) des dispositifs de convoyage (13) compte tenu de paramètres d'installation de dosage (1111) ; **caractérisé par** :
la mesure d'erreurs de dosage relatives (1112) indiquées par l'écart mesuré d'une valeur moyenne par unité de temps du poids de la matière première (21) apportée pour chaque dispositif de pesée (14) par rapport à une valeur de poids cible, la mesure de distributions statistiques associées concernant les erreurs de dosage relatives (1112) proportionnées pour chaque dispositif de pesée (14) et chaque matière première (21) apportée, la mesure de performances de dosage (1113) dans le temps pour chaque dispositif de convoyage (13) et chaque matière première (21) apportée sous la forme d'une série chronologique de valeurs de mesure concernant les performances de dosage (1113), et la mesure de vitesses de dosage (1114) en fonction du temps pour chaque dispositif de convoyage (13) et chaque matière première (21) apportée,
la détection de premières erreurs concernant des anomalies et erreurs de dosage (11121) du dispositif de dosage (1) compte tenu des erreurs de dosage relatives (1112) mesurées, ladite détection d'erreurs concernant des anomalies et erreurs de dosage (11121) étant déclenchée en cas de dépassement de l'écart mesuré par rapport à une valeur seuil définie pour chaque dispositif de pesée (14) et chaque matière première (21) apportée,
la détection de deuxièmes erreurs concernant des anomalies et erreurs de dosage (11122) du dispositif de dosage (1), la distance topologique (161) entre les séries chronologiques mesurées concernant les performances de dosage (1113) dans le temps étant déterminée, au moyen d'un alignement temporel dynamique (16), sous la forme d'une matrice de distance (162) et les séries chronologiques mesurées étant groupées en clusters disjoints au moyen d'une unité d'exploration de données statistiques (17) compte tenu de la matrice de distance (162) mesurée, et des séries chronologiques mesurées d'un premier cluster (171) indexant un mode de dosage dans une plage normale et des séries chronologiques mesurées d'un deuxième cluster (172) indexant un mode de dosage hors de ladite plage normale, et
en cas de détection de premières et/ou deuxièmes erreurs concernant des anomalies et erreurs de dosage (11121/11122) du dispositif de dosage (1), la transmission des vitesses de dosage (1114) mesurées en fonction du temps sous la forme de modèles de données d'entrée (181) auprès d'une unité d'apprentissage automatique (18) et l'adaptation des paramètres d'installation de dosage (1111) du dispositif de dosage (1) au moyen de la commande électronique d'installation (11) compte tenu des valeurs de sortie (182) de l'unité d'apprentissage automatique (18), ladite unité d'apprentissage automatique (18) classifiant les modèles d'entrée (181) au moyen de motifs appris et générant des paramètres de dosage (1111) correspondants.

2. Procédé selon la revendication 1, **caractérisé en ce qu'**un moteur (132) doté d'une transmission sert à l'entraînement de son dispositif de convoyage (13) respectif, le moteur (131) étant régulé par l'unité de commande (111) au moyen des paramètres d'installation de dosage (1111), ce qui permet de régler le débit massique souhaité.

3. Procédé selon la revendication 2, **caractérisé en ce qu'**au moins un des dispositifs de convoyage (13) est conçu sous la forme d'un convoyeur à vis (133), la régulation de la vitesse de rotation du convoyeur à vis (133) permettant de régler le débit massique souhaité.

4. Procédé selon l'une des revendications 1 à 3, **caractérisé en ce que** le poids de la matière première (21) apportée est mesuré en continu au moyen des dispositifs de pesée (14).

5. Procédé selon l'une des revendications 1 à 4, **caractérisé en ce que** l'erreur de dosage relative (1112) est déclenchée compte tenu de l'écart type mesuré de la valeur moyenne mesurée par unité de temps du poids en pourcentage en poids du poids cible.

6. Procédé selon l'une des revendications 1 à 5, **caractérisé en ce que** l'alignement temporel dynamique (16) est réalisé selon la méthode de Dynamic Time Warping.

7. Procédé selon l'une des revendications 1 à 6, **caractérisé en ce que** l'unité d'exploration de données statistiques (17) destinée au clustering de la matrice de distance (162) est fondée sur un clustering spatial basé sur la densité des applications avec bruit.

8. Procédé selon la revendication 7, **caractérisé en ce que** le clustering spatial basé sur la densité des applications avec bruit est fondé sur l'algorithme DBScan (173).

9. Procédé selon l'une des revendications 1 à 8, **caractérisé en ce que** l'unité de temps pour la mesure d'erreurs de dosage relatives (1112) est indiquée par l'écart mesuré de la valeur moyenne journalière du poids de la matière première apportée pour chaque dispositif de pesée (14) par rapport à une valeur de poids cible.

10. Procédé selon l'une des revendications 1 à 9, **caractérisé par** une mesure supplémentaire de paramètres de matière première, dont des paramètres de mesure visant à détecter des propriétés physiques des matières premières, au moyen de dispositifs de mesure de matière (191), et/ou de paramètres d'installation au moyen de capteurs ou dispositifs de mesure (192) proprioceptifs, et/ou de paramètres environnementaux au moyen de capteurs ou dispositifs de mesure (193) extéroceptifs, dont au moins l'humidité de l'air et/ou la pression de l'air et/ou la température ambiante et/ou des distributions de températures locales ; un ou plusieurs des paramètres de matière première et/ou des paramètres d'installation et/ou des paramètres environnementaux en fonction du temps étant transmis, en sus des vitesses de dosage mesurées, auprès de l'unité d'apprentissage automatique sous la forme de modèles de données d'entrée.

11. Procédé selon la revendication 10, **caractérisé en ce que** la mesure des paramètres d'installation comprend au moins une des valeurs de mesure suivantes : intensité absorbée du convoyeur ou énergie absorbée du moteur, couple de torsion du convoyeur et/ou hauteur de remplissage de la matière en vrac dans le récipient et/ou temps de dosage et/ou diamètre du tuyau d'alimentation et/ou diamètre de la spire d'alimentation et/ou angle d'inclinaison de la paroi de la trémie et/ou angle de frottement de la paroi et/ou angle de frottement effectif concernant les silos de matières premières.

12. Procédé selon l'une des revendications 1 à 11, **caractérisé en ce que** l'unité d'apprentissage automatique (18) repose sur des systèmes à logique floue statiques ou adaptatifs et/ou sur des réseaux de neurones supervisés ou non supervisés et/ou sur des réseaux de neurones flous et/ou sur des systèmes assistés par des algorithmes génétiques.

13. Procédé selon l'une des revendications 1 à 12, **caractérisé en ce que** l'unité d'apprentissage automatique (18) comprend des classifieurs naïfs bayésiens comme structure d'apprentissage automatique.

14. Procédé selon l'une des revendications 1 à 13, **caractérisé en ce que** l'unité d'apprentissage automatique (18) repose sur des structures d'apprentissage supervisées comprenant la régression logistique et/ou les arbres de décision et/ou une machine à vecteurs de support (SVM, support-vector machine) et/ou la régression linéaire comme structure d'apprentissage automatique.

15. Procédé selon l'une des revendications 1 à 13, **caractérisé en ce que** l'unité d'apprentissage automatique (18) repose sur des structures d'apprentissage non supervisées comprenant le clustering par K means ou la méthode des K plus proches voisins et/ou la réduction de la dimensionnalité et/ou la recherche de règles d'association.

16. Procédé selon l'une des revendications 1 à 13, **caractérisé en ce que** l'unité d'apprentissage automatique (18) repose sur des structures d'apprentissage par renforcement comprenant l'apprentissage Q.

17. Procédé selon l'une des revendications 1 à 13, **caractérisé en ce que** l'unité d'apprentissage automatique (18) repose sur l'apprentissage d'ensembles comprenant le Bagging (Bootstrap Aggregating) et/ou le Boosting et/ou le Stacking et/ou la forêt d'arbres décisionnels.

18. Procédé selon l'une des revendications 1 à 13, **caractérisé en ce que** l'unité d'apprentissage automatique (18) repose sur des structures de réseaux de neurones comprenant des réseaux de neurones à propagation avant et/ou des réseaux de Hopfield et/ou des réseaux de neurones convolutifs ou des réseaux de neurones convolutifs profonds.

19. Procédé selon l'une des revendications 1 à 18, **caractérisé en ce que**, en cas de détection de premières et/ou deuxièmes erreurs concernant des anomalies et erreurs de dosage (11121/11122) du dispositif de dosage (1), l'unité d'apprentissage automatique (18) classifie les modèles d'entrée (181) à l'aide de motifs appris et génère des instructions de système expert correspondantes.

20. Procédé selon la revendication 19, **caractérisé en ce que** les instructions de système expert génèrent au moins une instruction concernant le choix à optimiser de silos de matières premières (12) pour certaines matières en silo et/ou des instructions de nettoyage/entretien et/ou des avertissements concernant des infestations de nuisibles ou de champignons.

21. Procédé selon l'une des revendications 1 à 20, **caractérisé en ce que**, en cas de détection de premières et/ou deuxièmes erreurs concernant des anomalies et erreurs de dosage (11121/11122) du dispositif de dosage (1), l'unité d'apprentissage automatique (18) classifie les modèles d'entrée (181) à l'aide de motifs appris et génère des signaux d'information à destination d'un système central, ledit système central faisant le suivi de corrélations géographiques et/ou topographiques et/ou temporelles et générant des messages d'avertissement ou d'alarme correspondants.
